(19) Europäisches Patentamt
European Patent Office
Office européen des brevets

(11) **EP 1 484 997 B1**

(12) **EUROPÄISCHE PATENTSCHRIFT**

(45) Veröffentlichungstag und Bekanntmachung des Hinweises auf die Patenterteilung:
**07.01.2009 Patentblatt 2009/02**

(21) Anmeldenummer: 03744810.7

(22) Anmeldetag: **18.03.2003**

(51) Int Cl.:
***A46D 1/00*** *(2006.01)*

(86) Internationale Anmeldenummer:
**PCT/EP2003/002795**

(87) Internationale Veröffentlichungsnummer:
**WO 2003/079849 (02.10.2003 Gazette 2003/40)**

(54) **BORSTE**

BRISTLE

SOIE

(84) Benannte Vertragsstaaten:
**AT BE BG CH CY CZ DE DK EE ES FI FR GB GR HU IE IT LI LU MC NL PT RO SE SI SK TR**

(30) Priorität: **21.03.2002 DE 10212701**

(43) Veröffentlichungstag der Anmeldung:
**15.12.2004 Patentblatt 2004/51**

(73) Patentinhaber: **Geka-Brush GmbH**
**91572 Bechhofen (DE)**

(72) Erfinder: **WEIHRAUCH, Georg**
**69483 Wald-Michelbach (DE)**

(74) Vertreter: **Schneck, Herbert**
**Rau, Schneck & Hübner**
**Patentanwälte**
**Königstrasse 2**
**D-90402 Nürnberg (DE)**

(56) Entgegenhaltungen:
| | |
|---|---|
| DE-A- 19 942 147 | DE-B- 1 205 051 |
| GB-A- 2 323 026 | US-A- 5 531 582 |
| US-A- 5 669 097 | US-A- 5 837 179 |
| US-A- 5 926 900 | US-A1- 2003 044 604 |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Borste für eine Borstenware, insbesondere eine Reinigungsbürste, eine Zahnbürste oder eine Applikationsbürste, hergestellt aus thermoplastischen Polymeren im Wege des Spritzgießens.

Bei der Herstellung von Bürsten, Pinseln oder dergleichen sind die früher als Borstenmaterial verwendenden Tierhaare und Naturfasern überwiegend durch Kunststoffborsten ersetzt worden, wobei die Herstellung des Borstenmaterials weitgehend auf die schon frühzeitig praktizierte Herstellung synthetischer Textilfasern zurückgeht, d.h. auf Extrusions-oder Spinnprozesse. Eine Borste unterliegt allerdings völlig anderen Anforderungen als eine Endlosfaser in einem Faserverbund. Sie ist freistehend und nur einseitig befestigt und festigkeitstheoretisch als einseitig eingespannter, frei auskragender Biegebalken zu verstehen. Bei Gebrauch kommen Druck- und Stauchkräfte und gelegentlich auch Zugkräfte hinzu. Hieraus ergeben sich gegenüber Endlosfasern andere Festigkeitsanforderungen hinsichtlich der Biegesteifigkeit, der Biegewechselfestigkeit, der Knickstabilität und des Wiederaufrichtvermögens (bend-recovery).

Entsprechende Borsten können bei Zahnbürsten, Reinigungsbürsten oder -besen insbesondere für den Hygienebereich, Applikatoren für pulvrige oder flüssige Medien, insbesondere Flüssigkeiten, Reinigungsmittel, Lösemittel, Farben und Lacke sowie Kosmetika, bei Applikationspads, Reinigungspads einschließlich Matten für die Schuhreinigung, bei Kämmen, Haarbürsten oder bei technischen Bürsten Verwendung finden. Im folgenden soll beispielhaft von Borsten für eine Zahnbürste ausgegangen werden, jedoch ist die Erfindung darauf nicht beschränkt.

Es ist seit langem bekannt, dass es für die Reinigungswirkung einer Zahnbürste vorteilhaft ist, wenn die Borste auf ihrer Außenoberfläche strukturiert oder profiliert ist. Wenn beispielsweise die Borsten außenseitig mit warzenartigen Noppen (DE 100 17 167.2) oder Rippen (US 1 773 969) versehen ist, kann sich eine um bis zu 50% gesteigerte Wirkung bei der Plaque-Entfernung vom Zahn ergeben.

Derartig außenseitig strukturierte oder profilierte Borsten werden üblicherweise hergestellt, indem sie entweder in der gewünschten Querschnittsform extrudiert oder nach der Herstellung als unprofiliertes Monofil in kontinuierlicher Bearbeitung oberflächlich umgeformt werden. Die Profilierung verbessert zwar die Putz- bzw. Reinigungswirkung, bringt jedoch den Nachteil mit sich, dass die Profilierung im Befestigungsbereich der Borste deren Festigkeitseigenschaften nachteilig herabsetzt, so dass die Borste zum Um- oder Abknicken neigt.

Auch die hygienischen Bedingungen sind bei der Verwendung der bekannten außenseitig profilierten Borsten nachteilig beeinflusst. Aufgrund der Profilierung bestehen an der Borste nahe ihrer Einspannstelle und insbesondere auch in ihrem Einspannbereich Kammern und Hinterschneidungen, in denen sich Verunreinigungen absetzen können, die sich aufgrund des eng besetzten Borstenfeldes nicht oder nur in sehr unzureichendem Maße entfernen lassen. Dies kann zu Pilzbefall sowie Bakterien- und Mikrobenwachstum führen.

Um die Putz- und Reinigungswirkung einer Borste zu erhöhen, ist gemäß der US 3 256 545 sowie der US 4 167 794 vorgeschlagen worden, an dem freien Ende der Borste einen verbreiteten Kopf auszubilden, der den zylindrischen Borsten-schaft um ein Vielfaches des Durchmessers seitlich überragt. Bei einer derartigen Ausgestaltung ist der Einspannbereich aufgrund der Masse und des Bürstwiderstandes des Kopfes mit sehr hohen Biegemomenten belastet, so dass die Gefahr besteht, dass die Borste bei Gebrauch bereits nach kurzer Zeit umknickt und unbrauchbar wird.

Profilierte Borsten gemäß dem Oberbegriff des Anspruchs 1 werden in der WO 02/03831 A1 beschrieben. Darüber hinaus gehen aus der DE 199 42 147 A1 extrudierte und nachbearbeitete Borsten mit in Längsrichtung verlaufender Profilierung hervor.

Der Erfindung liegt die Aufgabe zugrunde, eine Borste der genannten Art zu schaffen, die hygienisch einwandfrei über eine lange Dauer eine gute Gebrauchswirkung und eine hohe Stabilität und Festigkeit besitzt. Ferner soll eine entsprechende Borsten aufweisende Borstenware geschaffen werden. Darüber hinaus soll ein Verfahren geschaffen werden, um eine entsprechende Borste im Wege des Gießens und insbesondere des Spritzgießens herzustellen, deren Biegeverhalten und Wiederaufrichtvermögen extrudierte Borsten übertrifft, eine bestmögliche Ausschöpfung der theoretischen Werte des Elastizitätsmoduls und der Zugfestigkeit und die Herstellung von Borsten hoher Qualität in einem großen Längenbereich bei relativ kleinen Querschnitten ermöglicht, um Borstengeometrien und Borstenanordnungen in einfacher Weise unter Anpassung an die Anforderungen des Endproduktes die Bürsten oder Pinsel herstellen zu können.

Hinsichtlich der Borste wird diese Aufgabe durch eine Borste mit den Merkmalen des Anspruchs 1 gelöst.

Die erfindungsgemäße Borste ist in und nahe ihrem unteren Einspannbereich unprofiliert, um einerseits gute Festigkeits- und Stabilitätseigenschaften der Borste zu erreichen und um andererseits die Ausbildung von Ausnehmungen und Hinterschneidungen und die damit verbundene Problematik mangelnder Hygiene zuverlässig zu vermeiden. Dabei kann die Borste insbesondere nach den statischen Anforderungen, d.h. bezüglich eines gewünschten Verformungsverhaltens und Wiederaufrichtvermögens, ausgelegt sein. Um der Borste eine gute Gebrauchswirkung, d.h. eine hohe Putz- und Reinigungswirkung, zu geben, ist sie auf ihrer freien Länge mit Abstand zu dem Einspannbereich zumindest bereichsweise mit einer oberflächlichen Profilierung versehen.

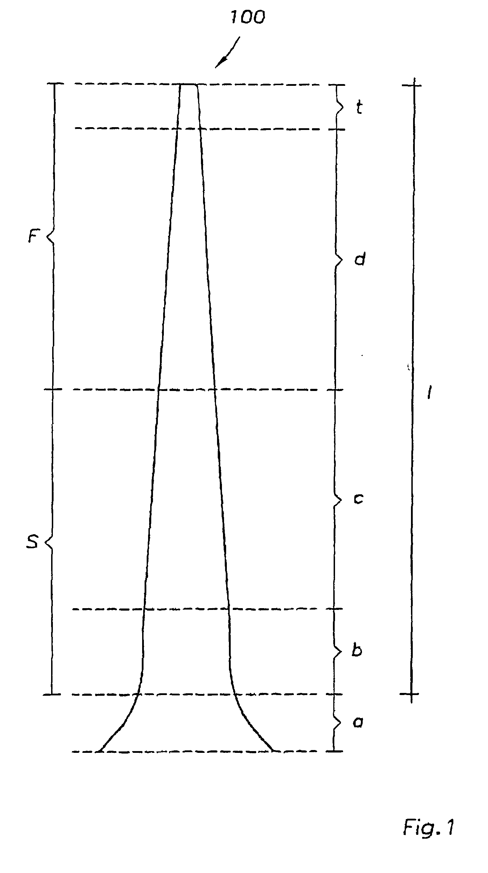

Zum Verständnis der Erfindung wird im folgenden zunächst unter Bezugnahme auf Figur 1 eine Definition der einzelnen Abschnitte einer Borste gegeben. Figur 1 zeigt eine Borste 100, die einen unteren, im wesentlichen kegelstumpfförmigen Wurzelbereich a besitzt, der zur Anbindung an oder Einbindung in einen Borstenträger oder Bürstenkörper dient oder selbst Teil des Borstenträgers ist. Oberhalb des Wurzelbereichs a weist die Borste 100 eine auskragende freie Länge 1 auf, die nach Anbringung der Borste an einem Borstenträger außerhalb des Borstenträgers angeordnet ist. Die freie Länge 1 der Borste 100 unterteilt sich in zwei Hauptbereiche, nämlich einen Schaftbereich S und einen Flex-Bereich F, die jeweils in zwei Abschnitte unterteilt sind. Der Schaftbereich S grenzt unmittelbar an den Wurzelbereich a an. Er kann beispielsweise 15% bis 85% und insbesondere 35% bis 65% der freien Länge 1 der Borste 100 umfassen. Oberhalb des Schaftbereichs S schließt der Flex-Bereich F an, der den Rest der freien Länge 1 einnimmt. Der Schaftbereich S setzt sich zusammen aus einem unteren, an den Wurzelbereich a angrenzenden Schaft-Basisabschnitt b und einem darüberliegenden Schaftabschnitt c. Der Schaft-Basisabschnitt b kann beispielsweise 10% bis 40% der Länge des Schaftbereichs S einnehmen oder auch relativ kurz sein, d.h. eine axiale Länge von $\leq$ 10 mm und insbesondere von $\leq$ 1 mm besitzen. Der oberhalb des Schaftbereichs S liegende Flex-Bereich F, der insbesondere für die Putz- und Reinigungseigenschaften der Borste maßgebend ist, setzt sich zusammen aus einem unteren, an den Schaftbereich S angrenzenden Wirk- und Flexabschnitt d und einem darüberliegenden, das freie Ende der Borste 100 bildenden Spitzenabschnitt t. Der Flex- und Wirkabschnitt d kann beispielsweise 50% bis 95% der Länge des Flex-Bereichs F einnehmen.

Um das Ansammeln von Verunreinigungen nahe der Einspannung oder Befestigung der Borste zu verhindern, ist erfindungsgemäß vorgesehen, dass die Borste zumindest in dem Schaft-Basisabschnitt b eine kontinuierliche, vertiefungsfreie Mantelfläche besitzt. Der Querschnitt der Borste in dem Schaft-Basisabschnitt b kann dabei kreisförmig, oval oder auch polygonförmig mit abgerundeten Ecken ausgebildet sein. Zerklüftungen oder Hinterschnitte auf der Manteloberfläche, die vorzugsweise glatt ausgebildet ist, sind vermieden.

In dem Flex-Bereich F, d.h. dem Wirk- und Flexabschnitt d und/oder dem Spitzenabschnitt t ist hingegen zumindest abschnittsweise auf der Mantelfläche der Borste eine von Erhebungen und/oder Vertiefungen gebildete, innerhalb einer Hüllfläche der Borste liegende Profilierung ausgebildet, die die Putz- und Reinigungswirkung der Borste erhöht.

Der Querschnitt der Borste besitzt auch im Schaftabschnitt c eine kontinuierliche und vertiefungsfreie Mantelfläche wie der Schaft-Basisabschnitt b. Dabei ist es jedoch nicht notwendig, dass der Schaftabschnitt c und der Schaft-Basisabschnitt b die gleiche Querschnittsform oder Querschnittsabmessungen aufweisen.

Um die Stabilität der Borste über eine möglichst lange Gebrauchsdauer sicherzustellen, kann erfindungsgemäß vorgesehen sein, dass die Querschnittsabmessungen der Borste im Bereich ihrer freien Länge 1, d.h. im Schaftbereich S und im Flex-Bereich F in keinem Querschnitt größer als die Querschnittsabmessungen im Bereich des Schaft-Basisabschnittes b und insbesondere als dessen unterer Querschnitt sind, mit dem der Schaft-Basisabschnitt b an den Wurzelbereich a anschließt.

Aufgrund der im Schaft-Basisabschnitt b vorgesehenen, kontinuierlichen, vertiefungsfreien Mantelfläche und der im Flex-Bereich F ausgebildeten Profilierung besitzt die Borste Bereiche unterschiedlicher Querschnittsform. Dabei kann die Querschnittsform in Längsrichtung der Borste ein- oder mehrfach wechseln. Die Borste kann beispielsweise aus aufeinanderfolgenden Bereichen mit rundem, ovalem, polygonförmigem (insbesondere quadratischem, dreieckigem, rechteckigem oder achteckigem), Y-förmigem, kreuz- oder sternförmigem, ringförmigem oder auch bogen- bzw. kreissegmentförmigem Querschnitt bestehen.

Die äußere Hüllfläche der Borste kann im Bereich ihrer freien Länge 1 in einer möglichen Ausgestaltung zumindest abschnittsweise von der Mantelfläche eines geraden Zylinders und/oder von der Mantelfläche eines Kegels oder Kegelstumpfes gebildet sein. Dabei ist insbesondere auch vorgesehen, dass die Borste auf ihrer freien Länge L aus einer Aufeinanderfolge von Bereichen unterschiedlicher geometrischer Form gebildet ist. Die Bereiche können beispielsweise zylindrisch, konisch, eingeschnürt (hyperboloidförmig) oder ausgebaucht (tonnenkörperförmig) sein. Dabei sollten die Übergänge zwischen den Bereichen unterschiedlichen Querschnitts und/oder unterschiedlicher geometrischer Form sowie die Übergänge zwischen den Profilierungen und/oder zwischen der Profilierung und der vertiefungsfreien Mantelfläche glatt und möglichst stufenlos verlaufen.

Soweit die Borste über ihre gesamte freie Länge oder zumindest abschnittsweise eine Konizität besitzt, sollte der Konizitätswinkel kleiner als 5° und insbesondere kleiner als 1° sein. Der Hüllflächen-Durchmesser der Borste kann zwischen 0,010 mm bis 10,0 mm betragen, wobei vorzugsweise Borsten mit einem Hüllflächen-Durchmesser $\leq$ 1,0 mm betroffen sind. Dabei kann der Härtegrad der Borste durch entsprechende Auswahl des Durchmessers und/oder der Querschnittsform und/oder der Zusammensetzung der Borste aus Aufeinanderfolge unterschiedlicher geometrischer Abschnitte und/oder durch die Materialwahl bestimmt werden.

In bevorzugter Ausgestaltung der Erfindung ist vorgesehen, dass die Profilierung im oberen Bereich des Wirk- und Flexabschnittes d und/oder im Spitzenabschnitt t ausgebildet ist. Dabei kann entweder nur eine einzelne Profilierung vorhanden sein, alternativ ist es jedoch auch möglich, mehrere gleichartige oder unterschiedliche Profilierungen in Längsrichtung der Borste aufeinanderfolgen zu lassen und insbesondere zwischen zwei axial beabstandeten Profilierungen einen Bereich mit vorzugsweiser glatter, vertiefungsfreier Mantelfläche auszubilden.

Die Mantelfläche kann außenseitig glatt sein, in Weiterbildung der Erfindung kann jedoch auch vorgesehen sein, dass die Mantelfläche der Borste zumindest abschnittsweise eine Rauhigkeit insbesondere im Mikrobereich besitzt.

Für die Ausbildung der Profilierung sind verschiedene Möglichkeiten gegeben. In einer ersten Ausführungsform ist vorgesehen, dass die Profilierung eine um die Borste umlaufende Nut umfasst. Dabei kann es sich um eine einzelne Nut handeln, die die Borste schraubenlinienförmig umgibt, es ist jedoch auch möglich, dass die Nut im wesentlichen senkrecht zur Längserstreckung der Borste ringförmig um diese umläuft. In diesem Fall sollten mehrere Nuten übereinander angeordnet sein, wobei zwischen benachbarten Nuten eine umlaufende, vorzugsweise spitzwinklige Kante gebildet ist, die die Reinigungsleistung erhöht. Der Querschnitt der Nut kann konkav ausgerundet oder auch V-förmig ausgestaltet sein.

Alternativ oder zusätzlich dazu kann die Profilierung mehrere in Längsrichtung der Borste verlaufende Längsnuten umfassen, wobei vorzugsweise vorgesehen sind, dass die Längsnuten über den Umfang der Borste verteilt und insbesondere nebeneinanderliegend angeordnet sind. Auch in diesem Fall kann zwischen benachbarten Nuten eine spitzwinklige Kante gebildet sein.

Die Profilierung kann auch dadurch gebildet sein, dass die Borste im Bereich der Profilierung einen kreuz- oder sternförmigen Querschnitt mit mehreren in Längsrichtung der Borste verlaufenden Rippen besitzt, die über den Borstenumfang verteilt angeordnet sind. Die Rippen können dabei außenseitig eine spitzwinklige Kante besitzen oder auch abgerundet sein.

In einer weiteren Ausführungsform kann vorgesehen sein, dass die Borste im Bereich der Profilierung einen polygonförmigen, insbesondere einen dreieckigen oder viereckigen Querschnitt besitzt, wobei die Querschnittskanten als spitzwinklige Kante ausgebildet oder auch abgerundet sein können.

Die Borste kann auch zwei der genannten Profilierungsarten in Überlagerung aufweisen, d.h. mit längs verlaufenden Rippen versehene Borste kann insbesondere auf der Außenseite der Rippen auch mit Längs- und/oder Quernuten versehen sein.

In einer speziellen Ausgestaltung der Borste insbesondere für die Anwendung in einer Applikationsbürste kann vorgesehen sein, dass nur der Spitzenabschnitt t mit einer Profilierung versehen ist. Dabei kann die geometrische Querschnittsform der Borste sich im Spitzenabschnitt ändern. Alternativ kann der Spitzenabschnitt t von sich axial erstreckenden Fingern gebildet sein oder zumindest ein axiales Profilelement umfassen, das in axialer Richtung der Borste von dem darunterliegenden Wirk- und Flexabschnitt d hervorragt und den Spitzenabschnitt t bildet.

In Weiterbildung der Erfindung ist vorgesehen, dass die Borste aus axial aufeinanderfolgenden Abschnitten oder Teilstücken zusammengesetzt ist, die aus unterschiedlichen Materialien bestehen. Die Materialien können dabei unterschiedliche Eigenschaften besitzen. So kann insbesondere der Schaft-Basisabschnitt b und gegebenenfalls auch der Schaftabschnitt c aus einem Material bestehen, dass der Borste eine gewünschte Stabilität und Festigkeit verleiht, während der Wirk- und Flexabschnitt d und der Spitzenabschnitt t aus einem Material bestehen kann, das sich besonders gut zur Erzielung einer guten Putz- und Reinigungsleistung und eventuell auch zur Aufbringung von der Borste beigefügten Additiven, beispielsweise Stoffen zur antimikrobiellen Ausrüstung eignet. Darüber hinaus kann das Material der Borste zumindest abschnittsweise verstärkt sein, was entweder durch die Beimischung von Verstärkungsfasern oder Verstärkungsfasermischungen und/oder durch Ausbildung eines Borstenkerns aus einem stabilen, aussteifenden Material erfolgen kann.

Die aus unterschiedlichen Materialien bestehenden, axial aufeinanderfolgenden Abschnitte oder Teilstücke der Borste können zur Kenntlichmachung ihrer Eigenschaften mit unterschiedlichen Einfärbungen versehen sein kann, wobei zumindest eines der Teilstücke als Verbrauchsindikator ausgebildet sein kann.

Das freie Ende der Borste, d.h. der äußere Bereich des Spitzenabschnitts t ist vorzugsweise entgratet bzw. verrundet und die Borsten können durch Zugabe von nicht-aufschmelzenden Partikeln beim Herstellungsprozess, insbesondere beim Gieß- oder Spritzgießprozess, leicht oberflächenstrukturiert sein, da die nicht aufschmelzenden Partikel bei dem leichten Schrumpfen der Borsten während ihrer Abkühlung die Querkontraktion behindern und somit zu einer oberflächlichen leichten Wellenstruktur führen.

Darüber hinaus kann die Borste zumindest abschnittsweise mit einer Beschichtung versehen sein, die insbesondere im Bereich der Strukturierung angeordnet ist und beispielsweise die Additive und/oder die Stoffe zur antimikrobiellen Ausrüstung trägt. Dabei kann die Beschichtung als Verbrauchsindikator ausgebildet sein.

Die Verformungseigenschaften der Borste lassen sich auch durch einen vom Wurzelbereich a ausgehenden inneren axialen Hohlkanal beeinflussen, der darüber hinaus der Zuführung der Stoffe zur antimikrobiellen Ausrüstung während des Gebrauchs der Borste dienen kann. Der axiale Hohlkanal kann sich über einen Teilbereich der Borste oder auch über annähernd die gesamte Borste bis kurz unterhalb des freien Endes erstrecken. In Weiterbildung der Erfindung ist vorgesehen, dass der Hohlkanal sich durch die gesamte Borste erstreckt und im Spitzenbereich mündet, d.h. an der Spitze der Borste offen ist.

Die Borste kann als symmetrischer Körper ausgebildet sein, wobei dann der Übergang zwischen der Profilierung und der unprofilierten Mantelfläche in einer Ebene erfolgt, die im wesentlichen senkrecht zur Längsachse der Borste verläuft. Eine derartige Borste kann in beliebiger Winkelausrichtung verwendet werden, da sie in allen Winkelpositionen die gleichen Eigenschaften besitzt. Um der Borste jedoch in einer bestimmten radialen Richtung eine bevorzugte Wirkung und insbesondere Putz- und Reinigungswirkung zu verleihen, kann in Weiterbildung der Erfindung vorgesehen sein, dass der Übergang zwischen der Profilierung und der unprofilierten Mantelfläche in einer Ebene erfolgt, die schräg zur Längsachse der Borste verläuft, wobei die Ebene vorzugsweise in einem Winkelbereich von 30° bis 60° zur Längsachse der Borste liegt.

Um die Stabilitäts- und Festigkeitseigenschaften und insbesondere das Verformungsverhalten der Borste zu beeinflussen, kann der Wurzelbereich a und insbesondere der Schaft-basisabschnitt b mit einer Ummantelung versehen sein. Die Ummantelung sorgt des Weiteren dafür, dass das Eindringen von Verunreinigungen zuverlässig verhindert ist. Alternativ ist es jedoch auch möglich, die gesamte Borste mit einer Ummantelung zu versehen. Die Ummantelung kann dabei Teil des Borstenträgers sein.

Die Borsten können aus thermoplastischen Kunststoffen, Elastomeren, thermoplastischen Elastomeren, Duroplasten, Silikonen oder anderen gieß-, spritzgieß- oder pressfähigen Materialien bestehen. Dabei können auch zwei Materialien innerhalb eines Querschnitts der Borste nebeneinanderliegen und somit eine Mehrschichtborste (side-by-side construction) bilden.

Die Borsten können nach ihrer Herstellung zumindest auf einem Teil ihrer Länge mechanisch, thermisch oder chemisch nachbearbeitet sein. Dabei kann es sich insbesondere um eine Beschichtung bzw. ein Einfärben, Lackieren, Bedampfen oder Galvanisieren handeln. Darüber hinaus kann die Borste poliert, geschliffen oder angerauht werden. Insbesondere wird die Borste speziell an ihrem freien Ende gerundet, gespitzt oder geschlitzt. Eine oberflächliche Nachbearbeitung der Borste kann ein Sandstrahlen bzw. eine Beaufschlagung mit Laserstrahlen umfassen, wodurch eine oberflächliche Strukturierung erfolgt. Dabei kann die Nachbearbeitung auch eine zumindest abschnittsweise Farbveränderung der Borste bewirken, um beispielsweise Gebrauchs- oder Verbrauchsbedingungen oder auch Wirkungen zu visualisieren.

Die Nachbearbeitung kann auch ein chemisches Strukturieren oder Abtragen umfassen. Wenn die Nachbearbeitung nur an einem Teil der Borsten insbesondere an den Borstenenden vorgenommen wird, kann dies dazu führen, dass eine Verbrauchsanzeige gegeben ist, wie sie insbesondere bei Zahnbürsten und Hygienebürsten sinnvoll ist.

Eine erfindungsgemäße Borste kann beispielsweise durch Gießen, Abtragen, Formpressen oder Stauchen hergestellt werden. In bevorzugter Ausgestaltung der Erfindung ist jedoch vorgesehen, dass die Borste durch Spritzgießen insbesondere eines thermoplastischen Polymers hergestellt wird. Dabei kann ein Verfahren Anwendung finden, wie es Gegenstand der WO 02/03831 ist, deren Inhalt hiermit ausdrücklich zum Gegenstand dieser Anmeldung gemacht wird.

Ausgehend von dem bekannten Spritzgießverfahren, bei dem die Polymerschmelze in einen borstenformenden Kanal mit vorgegebener Länge und über diese Länge vorgegebenem Querschnittsverlauf unter Druck gespritzt und der Kanal während des Spritzgießvorgangs entlüftet wird, ist es vorgesehen, dass die Höhe des Spritzdrucks in Abhängigkeit von dem Querschnittsverlauf des borstenformenden Kanals so eingestellt wird, dass eine Scherströmung mit einer hohen Kerngeschwindigkeit im Zentrum der strömenden Polymerschmelze und großer Scherwirkung aufgrund der Wandreibung der Polymerschmelze unter ausgeprägter Längsorientierung der Polymermoleküle wenigstens im wandnahen Bereich der Polymerschmelze erzeugt und auf der Länge des Kanals aufrechterhalten wird, wobei zugleich der Kanal auf seiner Länge so entlüftet wird, dass die Aufrechterhaltung der Scherströmung unterstützt wird.

Dabei wird von der Erkenntnis ausgegangen, dass sich das Biegeverhalten eines Monofils in erster Linie durch die Erzeugung und Aufrechterhaltung einer Molekülorientierung steigern lässt, die beim Spritzgießen von Borsten, Bürsten und Pinseln bisher nicht verwirklicht worden ist. Die Molekularstruktur in einer strömenden Polymerschmelze lässt sich merklich nur bei ausreichend engen Querschnitten und nur dadurch beeinflussen, dass der Schmelzeströmung ein Geschwindigkeitsprofil mit starker Scherwirkung aufgezwungen wird, um die an sich energetisch günstigste, spannungsfreie Knäuelstruktur zu deformieren und zu strecken. Es wird deshalb der Spritzdruck so hoch gewählt, dass sich in den borstenformenden Kanälen ein steiles Strömungsprofil ausbildet, das sich durch eine hohe Kerngeschwindigkeit im Zentrum der Strömung und große Scherwirkung im Randbereich derselben aufgrund der Wandreibung der Polymerschmelze an der Kanalwandung auszeichnet, wobei die Scherkräfte aufgrund der Wandreibung umso größer sind, je höher die Differenzgeschwindigkeit benachbarter Strömungsschichten ist. Ein solches Strömungsprofil mit hoher Kerngeschwindigkeit gewährleistet ferner eine einwandfreie Formfüllung des borstenformenden Kanals auch bei engsten Querschnitten (kleiner Borstendurchmesser) und großer Länge des Kanals (Borstenlänge).

Das Geschwindigkeitsprofil lässt sich in Abhängigkeit von dem über die Länge des borstenformenden Kanals vorgegebenen Querschnittsverlauf durch einen entsprechend hohen, gegebenenfalls auch variablen Spritzdruck einstellen. Dadurch wird eine Längsorientierung der Polymermoleküle nahe der Kanalwandung und mit abnehmender Ausprägung innerhalb des gesamten Schmelzestroms erreicht, wobei die Höhe der Kerngeschwindigkeit ferner ein zu frühes Erstarren der Schmelze auch bei kleinen Querschnitten und großer Länge verhindert. Ein hoher Druck allein reicht jedoch nicht aus, um einen engen Formkanal schnell zu füllen. Es wird deshalb der Kanal auf seiner Länge so entlüftet, dass die Aufrechterhaltung der Scherströmung mit hoher Fließgeschwindigkeit bis in das Ende des Kanals unterstützt wird, so dass die angestrebte Längsorientierung der Moleküle bis in die Borstenspitze reicht.

Praktische Versuche haben ergeben, dass der Spritzdruck in Abhängigkeit vom Querschnittsverlauf des borstenformenden Kanals wenigstens 500 bar (0,5•10⁵ kPa) betragen sollte. Für die hier in Rede stehenden Qualitätsborsten mit einem mittleren Borstendurchmesser von z.B. 0,3 (gemessen auf der halben Länge), also einem entsprechenden Querschnitt des borstenformenden Kanals und einer Länge von 10,5 mm lässt sich das gewünschte Geschwindigkeitsprofil mit einem Spritzdruck von größer 500 (0,5•10⁵ kPa) erzeugen. Der vorgenannte Spritzdruck lässt sich in der Regel zu etwa 2/3 als spezifischer Druck im borstenformenden Kanal umsetzen, so dass die Polymerschmelze in dem Kanal einen Druck > 300 bar (0,3•10⁵ kPa) aufweisen sollte.

Thermoplastische Kunststoffe bilden bei der Erstarrung unterhalb der Kristallschmelztemperatur Kristallite, die je nach Form und Ordnung den Elastizitätsmodul (E-Modul) und die Zugfestigkeit (Zerreißfestigkeit) beeinflussen. Einen positiven Einfluss im Sinne einer Versteifung durch Erhöhung des E-Moduls und eine Verfestigung im Sinne der Erhöhung der Zugfestigkeit lässt sich durch Bildung von Nadelkristallen erreichen, die zunächst eine gestreckt kettige Kristallkeimbildung an parallel liegenden Molekülabschnitten voraussetzen. Diese Keimbildung lässt sich gegenüber einer isothermen Kristallisation durch Spannungsinduzierung, wie sie u.a. bei Fließvorgängen gegeben ist, um ein Vielfaches steigern. Der vorgesehene hohe Spritzdruck und die dadurch erzielte hohe Fließgeschwindigkeit der Polymerschmelze im borstenformenden Kanal fördert somit nicht nur die molekulare Längsorientierung sondern auch die Kristallbildung, wobei der hohe Druck als weitere Spannungsinduzierung zugleich die Packungsdichte der Kristalle erhöht. Durch die teilweise Kristallisation der molekularorientierten Schmelze erhöht sich die Relaxationszeit, d.h. die Molekülorientierung bleibt länger aufrechterhalten.

Die zuvor beschriebenen Effekte werden noch dadurch unterstützt, dass der borstenformende Kanal gekühlt wird.

Je enger der Querschnitt und je größer die Länge des borstenformenden Kanals ist, würde man eher ein Warmhalten der Kanalwände erwägen, um die Viskosität der Polymerschmelze zu erhalten und eine vollständige Formfüllung zu erreichen. Diese Formfüllung ist jedoch bei Einstellung der genannten Verfahrensparameter auch bei Kühlung des borstenformenden Kanals gewährleistet. Durch die Kühlung des Kanals und die damit verbundene Spannungsinduzierung wird die Kristallbildung zusätzlich gefördert und die Relaxationszeit erhöht. Die an der Kanalwandung entstehende stabilisierende Außenschicht der Borste ermöglicht eine Erhöhung des beim Spritzgießen üblichen Nachdrucks. Je höher der Nachdruck, umso stärker wird die Kristallkeimbildung im noch schmelzflüssigen Kern der Borste gefördert. Durch den Druck wird zugleich die Schmelztemperatur erhöht und somit bei gegebener Massetemperatur die Schmelze stärker unterkühlt, wodurch weiterhin die Kristallwachstumsgeschwindigkeit positiv beeinflusst und die Relaxation der Moleküle erschwert wird.

Der hohe Spritzdruck und die hohe Fließgeschwindigkeit erfordern besondere oder zusätzliche Maßnahmen für eine schnelle und effektive Entlüftung, um eine vollständige Formfüllung zu gewährleisten und Kavitationen am Formkanal oder Lufteinschlüsse in der Schmelze zu vermeiden. Bei den Spritzgießverfahren nach dem Stand der Technik erfolgt die Entlüftung des borstenformenden Kanals bei einer vollständig geschlossenen Kavität über das Ende des Kanals oder aber bei einer längsgeteilten Spritzgießform für den Kanal in zwei borstenparallelen Ebenen. Im erstgenannten Fall ist zur Ausbildung eines einwandfreien, vorzugsweise abgerundeten Borstenendes eine starke Drosselung der Entlüftung notwendig, um den Übertritt von Polymerschmelze in die Entlüftungsquerschnitte zu vermeiden. Bei borstenparalleler Entlüftung liegt die Formtrennebene in Strömungsrichtung mit der Folge, dass die Polymerschmelze auch in engste Entlüftungsspalte eindringt und zur Bildung von Formtrennähten entlang des Borstenmantels führt.

Es ist deshalb vorgesehen, dass der borstenformende Kanal quer zur Strömungsrichtung der Polymerschmelze entlüftet wird, wobei die Entlüftung vorzugsweise in mehreren quer zur Strömungsrichtung der Polymerschmelze liegenden Ebenen erfolgt. Die Anzahl der Entlüftungsebenen wird umso größer gewählt, je länger der borstenformende Kanal ist, so dass bei einer vorgegebenen Kanallänge die Entlüftung in Abhängigkeit von der Geschwindigkeit der Schmelzefront gleichsam gesteuert erfolgt. Da die Entlüftung in einer solchen Ebene über den gesamten Umfang des Borstenkanals erfolgen kann, steht eine entsprechend große Spaltlänge zur Verfügung, die bei mehreren Ebenen quer zur Strömungsrichtung größer sein kann als bei einer borstenparallelen Formtrennebene.

Die Entlüftungsebenen können über die Länge des borstenformenden Kanals abstandsgleich, je nach zu entlüftendem Volumen auch mit progressivem oder degressivem Abstand in Strömungsrichtung der Polymerschmelze vorgesehen werden. Damit ist zugleich die Aufrechterhaltung eines ausreichend hohen Gegendrucks im Kanal möglich, um eine gleichmäßige Formfüllung zu erhalten.

Der borstenformende Kanal kann allein durch Verdrängen der Luft mittels des Strömungsdrucks der Polymerschmelze entlüftet werden, doch kann die Entlüftung auch durch einen äußeren Unterdruck unterstützt werden.

Dieses Verfahren gibt die Möglichkeit, die Polymerschmelze in einen borstenformenden Kanal mit einem von der Anspritzseite aus im wesentlichen gleichbleibenden Querschnitt zu spritzen, so dass eine im wesentlichen zylindrische Borste erhalten wird, die mit der bisher bei Borsten und Bürsten angewandten Spritzgießtechnik nicht zu erzeugen war.

Es kann aber auch ein sich von der Anspritzseite im wesentlichen kontinuierlich verjüngender Querschnitt vorgesehen werden, so dass eine Borste mit vorzugsweise nur schwacher Konizität erhalten wird, die in vielen Anwendungsfällen erwünscht ist, um die Biegeelastizität von der Borstenwurzel zum Borstenende zu erhöhen. Eine solche Konizität fördert auch die Aufrechterhaltung oder gar Verstärkung eines steilen Geschwindigkeitsprofils mit hoher Kerngeschwindigkeit und über die Länge größer werdender Scherwirkung im Randbereich, so dass trotz erhöhten Strömungswiderstandes die Molekülorientierung und Kristallbildung zum Borstenende hin noch gefördert wird.

Durch das Spritzgießen lassen sich maßhaltige Borsten mit einer Toleranz von ±3% im Querschnitt und in der Länge herstellen, während extrudierte Borsten bei den gleichen konstruktiven Parametern Toleranzen von ±10% aufweisen. Hinzu kommt bei extrudierten Borsten eine verfahrensbedingte Ovalisierung des zunächst kreisrunden Querschnitts, was bei den wie vorstehend beschrieben hergestellten Borsten vermieden wird.

In der Spritzgießtechnik werden üblicherweise Entformungsschrägen von einigen Grad (>1,00°) als notwendig erachtet, um das Spritzgußteil einwandfrei entformen zu können. Das Entformen muss in der Regel durch Auswerfer unterstützt werden. Beim Spritzgießen von Borsten nach dem eingangs geschilderten Stand der Technik muss die Formschräge wesentlich höher gewählt werden, um ein Abreißen der Borste beim Entformen zu verhindern (US 3 256 545). Nicht zuletzt aus diesem Grunde greift der Stand der Technik zu Spritzgießwerkzeugen mit borstenparalleler Formtrennebene unter Inkaufnahme der beschriebenen Nachteile. Das vorstehend beschriebene Verfahren ermöglicht eine Reduzierung der Formschräge bis auf den Wert 0° bei gleichwohl ausreichender Formfüllung. Es lassen sich also schlanke Borsten großer Länge mit relativ geringer Konizität im Bereich von 0,2 bis 0,5° herstellen, wenn die positiven Eigenschaften einer konischen Borste mit einem progressiven Biegewinkel zum Borstenende hin erwünscht sind. Aufgrund der durch die Längsorientierung und verstärkten Kristallbildung und der hiermit einhergehenden Erhöhung der Zugfestigkeit (Zerreißfestigkeit) der Borste, insbesondere in dem für das Entformen bedeutsamen wandnahen Bereich, lässt sie sich auch gut entformen. Weitere Maßnahmen zur Erleichterung des Entformens sind im Zusammenhang mit der Vorrichtung beschrieben.

In einer weiteren Ausführung des Verfahrens wird die Polymerschmelze in einen sich zum borstenformenden Kanal düsenartig verengenden Einlaufbereich zur Erzeugung einer Dehnströmung gespritzt, um eine Borste mit einem verbreiterten Wurzelbereich mit sich gegebenenfalls kontinuierlich zur eigentlichen Borste verjüngender Kontur zu erhalten.

Durch eine solche Verengung wird eine Dehnströmung erzeugt, die in erheblichem Maße zur Molekülorientierung und aus strömungstechnischen Gründen zu einer entsprechenden Überhöhung des Strömungsprofils im Anschluss an die Verengung führt, was eine Anordnung der Verengung nahe der Anspritzseite empfiehlt. Es können aber auch über die Länge des borstenformenden Kanals Verengungen vorgesehen werden, um gestufte Borsten zu erhalten, wobei auch hier die Verengungen positive Auswirkungen auf die Molekularstruktur und die Kristallbildung haben.

Der Querschnitt des borstenformenden Kanals nach einem gegebenenfalls vorgeschalteten Einlaufbereich wird vorzugsweise mit einer größten Weite von ≤ 3 mm gewählt, so dass die spritzgegossene Borste einen entsprechenden Durchmesser mit einem gegebenenfalls breiteren Wurzelbereich aufweist. Borsten diesen Querschnitts mit einem breiteren Wurzelbereich lassen sich durch Extrudieren bzw. Spinnen nicht herstellen. Der Begriff "größte Weite" bedeutet hierbei, dass die Borste auch einen von der Kreisform abweichenden, z.B. ovalen Querschnitt, aufweisen kann, wobei die größte Weite der Länge der größeren Achse des Ovals entspricht.

Bei Anwendung dieses Verfahrens kann ferner das Verhältnis der größten Weite zur Länge des Kanals von ≤ 1:5 bis 1:1000, vorzugsweise bis ≤ 1:250 gewählt werden. Es lassen sich z.B. Borsten herstellen, die bei einem maximalen Durchmesser von 3 mm im oder nahe dem Wurzelbereich eine Länge zwischen 15 mm und 750 mm aufweisen. Je kleiner die größte Weite ist, umso kürzer wird man die Länge wählen. Für hohe Anforderungen, beispielsweise bei Zahnbürsten, Auftragspinseln etc. empfehlen sich Durchmesser oberhalb des Wurzelbereichs von ≤ 0,5 mm, die bei dem vorstehend beschriebenen Verfahren Borstenlängen bis über 60 mm zulassen.

Dieses Verfahren lässt sich gleichermaßen vorteilhaft dahingehend modifizieren, dass die Polymerschmelze gleichzeitig in mehrere benachbart angeordnete borstenformende Kanäle unter Bildung einer entsprechenden Anzahl von Borsten gespritzt wird, so dass sich in einem Spritzgießvorgang ein Satz von Borsten herstellen lässt. Durch Minimierung des Abstandes der borstenformenden Kanäle lassen sich Borstenanordnungen in Form von Bunden (pucks) durch leichtes Kompaktieren der entformten Borsten herstellen.

Die Anzahl und Anordnung der borstenformenden Kanäle kann auch so getroffen werden, dass mit einem Spritzvorgang der gesamte Borstenbesatz einer Bürste oder eines Pinsels erzeugt wird, wobei die Abstände zwischen den Borsten und ihre geometrische Zuordnung entsprechend der gewünschten Anordnung im Borstenbesatz variiert werden kann.

In einer weiteren Ausführung ist vorgesehen, dass die Polymerschmelze unter gleichzeitiger Bildung einer Verbindung zwischen wenigstens zwei Borsten in die benachbart angeordneten, borstenformenden Kanäle gespritzt wird, wobei die Verbindung sowohl für die weitere Handhabung der verbundenen Borsten, als auch als Hilfsmittel zur Verbindung mit einem Bürstenkörper, Pinselgriff oder dergleichen dienen kann. Stattdessen kann nach dem Spritzen der Borsten aus einem Polymer eine Polymerschmelze aus einem anderen Polymer nachgespritzt werden, um die Verbindung zwischen den Borsten herzustellen. Die Verbindung kann in Form von Stegen, mehrere Borsten verbindenden Gittern oder dergleichen ausgebildet werden. Bei Verwendung verschiedener Polymere mit einem Fügefaktor ≥20% ist eine ausreichend sichere Verbindung gewährleistet.

Die Verbindung kann ferner so gestaltet werden, dass sie einen Borstenträger bildet, der zugleich den Bürstenkörper oder einen Teil desselben darstellen kann oder aber durch Aufspritzen mindestens einer anderen Polymerschmelze zu einem Bürstenkörper oder Pinselgriff vervollständigt werden kann. Dabei kann es sich um ein anderes thermoplastisches oder thermoelastisches Polymer handeln.

In einer weiteren Variante des Verfahrens können mehrere Borsten mit unterschiedlicher Länge gespritzt werden, so dass in Kombination mit dem sie verbindenden Borstenträger ein kompletter Borstenbesatz oder Teilbesatz für eine Bürste oder einen Pinsel herstellbar ist, bei der die Borstenenden auf unterschiedlicher Höhe einer ebenen oder nichtebenen Hüllflächen liegen, um mit der fertigen Bürste gekrümmte Konturen mit den Borstenenden optimal zu erfassen..

Ebenso können die mehreren Borsten mit unterschiedlichen Querschnitten gespritzt werden, um bei einer fertigen Bürste in vorgegebenen Bereichen unterschiedliche Wirkungen zu ermöglichen.

Gleichermaßen können die mehreren Borsten mit über deren Länge unterschiedlichem Querschnittsverlauf gespritzt werden. Schließlich können die mehreren Borsten auch in nichtparalleler Lage zueinander gespritzt werden, um einen Borstenbesatz mit unterschiedlicher Borstenstellung zu erzeugen.

Gemäß einer anderen Ausführung des Verfahrens können Borsten gleicher Geometrie, aber unterschiedlicher Biegeelastizität (Härte) durch Spritzgießen verschiedener Polymerschmelzen in denselben Formkanälen erzeugt werden. Bei extrudierten Borsten für Bürsten mit unterschiedlichen Härtegraden (textures), z.B. für Zahnbürsten mit den Härtegraden weich, mittel, hart, konnte der gewünschte Härtegrad nur über den Durchmesser der Borste beeinflusst werden, d.h. es waren für Zahnbürsten gleicher Bauweise bis zu drei verschiedene Borstendurchmesser bereitzuhalten und zu verarbeiten. Mit dem vorstehend beschriebenen Verfahren können diese Härtegrade allein durch die Polymerwahl und gegebenenfalls eine Anpassung des Spritzdrucks bei gleichem Borstendurchmesser verwirklicht werden.

Die Borsten können weiterhin aus einem Polymer oder einer Polymermischung gespritzt werden, die im erstarrten Zustand reduzierte sekundäre Bindungskräfte aufweisen. Solche Borsten lassen sich nach der Herstellung, gegebenenfalls auch erst nach der Weiterverarbeitung zu Bürsten oder Pinseln durch mechanische Kräfte spalten und auf diese Weise flags bilden.

Schließlich können die Borsten aus einem Polymer mit bei Gebrauch wirksam werdenden Additiven gespritzt werden. Dabei kann es sich um Additive mit mechanischer, z.B. abrasiver Wirkung, oder beispielsweise bei Borsten für Zahnbürsten um Additive mit pflegender, therapeutischer oder remineralisierender Wirkung handeln. Additive dieser Art sind vielfältig bekannt.

Eine Vorrichtung zum Spritzgießen von Borsten aus thermoplastischen Polymeren umfasst eine Einrichtung zur Erzeugung des Spritzdrucks und eine Spritzgießform, die wenigstens einen Zuführkanal für die Polymerschmelze und wenigstens eine Kavität in Gestalt eines Formkanals mit einer der Länge und dem Querschnittsverlauf der herzustellenden Borste entsprechenden Formkontur aufweist, wobei dem Formkanal Entlüftungsmittel zum Abführen der beim Spritzgießen verdrängten Luft zugeordnet sind. Vorrichtungen dieses Aufbaus sind in dem eingangs beschriebenen Stand der Technik bekannt.

Eine solche Vorrichtung zeichnet sich dadurch aus, dass die Einrichtung zur Erzeugung eines Spritzdrucks von vorzugsweise wenigstens 500 bar ($0,5 \cdot 10^5$ kPa) ausgestattet ist und die Entlüftungsmittel über die Länge des Formkanals verteilt angeordnete Entlüftungsquerschnitte aufweisen, die im Zusammenwirken mit dem Spritzdruck zur Ausbildung einer Scherströmung mit hoher Kerngeschwindigkeit im Zentrum der Polymerschmelze und großer Scherwirkung an der Wandung des Formkanals ausgelegt sind.

Mit einer solchen Vorrichtung können Borsten durch Spritzgießen hergestellt werden, wie sie im Zusammenhang mit dem Verfahren bereits beschrieben sind. Gegenüber bekannten Spritzgießvorrichtungen zur Herstellung von Borsten bzw. von einstückige Bürsten mit Borsten, ist die hier beschriebene Vorrichtung so gestaltet, dass in dem die Borste formenden Kanal die angestrebte Strömungsdynamik erreicht wird.

Die Einrichtung zur Erzeugung des Spritzdrucks ist vorzugsweise so ausgelegt, dass Spritzdrücke zwischen 500 und 4000 bar ($0,5 \cdot 10^5$ bis $4 \cdot 10^5$ kPa) in Abhängigkeit von der Länge und dem Querschnittsverlauf des Formkanals einstellbar sind. Der Druck wird umso höher gewählt, je kleiner der Querschnitt der herzustellenden Borste und je größer deren Länge ist.

Die Einrichtung zur Erzeugung des Spritzdrucks und die Entlüftungsquerschnitte am Formkanal sind konstruktiv und steuerungstechnisch so ausgelegt, dass die Polymerschmelze in dem Formkanal einen spezifischen Druck von wenigstens 300 bar ($0,3 \cdot 10^5$ kPa) bis zu 1300 bar ($1,3 \cdot 10^5$ kPa) hat.

Diese Auslegung erfolgt in Anpassung an den Massestrom und die bis zum Formkanal zu überwindenden Strömungswiderstände.

Bei einem gegebenen, ausreichend hohen Spritzdruck an der Erzeugungseinrichtung ist vorzugsweise vorgesehen, dass der Spritzdruck in Abhängigkeit von der Länge und dem Querschnittsverlauf des Formkanals steuerbar ist, um mit einem Spritzgießaggregat Spritzgießformen verschiedener Geometrie abspritzen zu können.

Diesem Zweck kann die weitere Maßnahme dienen, dass die Entlüftungsmittel in Abhängigkeit von dem spezifischen Druck steuerbare Entlüftungsquerschnitte aufweisen.

Bei der Vorrichtung sind vorteilhafterweise der Spritzgießform mit dem Formkanal Kühlmittel zugeordnet, wobei es sich um eine externe Kühlung nach jedem Spritzgießtakt bzw. nach dem Entformen handeln kann. Es können aber auch dem Formkanal in der Spritzgießform Kühlmittel zugeordnet sein, mit denen der Formkanal auf niedriger Temperatur gehalten wird.

In einer besonders bevorzugten Ausführung ist vorgesehen, dass die Spritzgießform aus mehreren quer zur Längserstreckung des Formkanals geschichteten Formplatten besteht, von denen jede einen Längenabschnitt des Formkanals aufweist.

Im Gegensatz zum Stand der Technik mit mehr oder weniger blockförmigen Spritzgießformen ist hier ein aus Formplatten geschichteter Aufbau vorgesehen. Dieser Aufbau ermöglicht es, in jeder Formplatte, die eine geringe Dicke aufweist, kleinste Bohrungsquerschnitte in hoher Präzision herzustellen. Diese wie aber auch jede andere Fertigungstechnik würde bei größeren Bohrungstiefen versagen. Dies ist nicht zuletzt der Grund dafür, dass man bisher auf längsgeteilte Spritzgießformen bei der Herstellung von engen Querschnitten angewiesen war. Deren Nachteile sind im Zusammenhang mit dem Stand der Technik beschrieben. Durch die Auflösung der Spritzgießform in mehrere Platten lassen sich Formkanäle großer Länge mit hoher und reproduzierbarer Präzision über die gesamte Länge verwirklichen. Die das Ende der Formkanäle aufweisenden Formplatten, die das Borstenende abformen, können aufgrund der geringen Dicke der Formplatten Kavitäten mit nur geringer Tiefe aufweisen, die ohne zusätzliche Entlüftungsmaßnahmen das Borstenende konturenscharf und ohne jede Formtrennnaht abbilden. Das in engen Formquerschnitten beobachtete Oxidieren des Polymers durch den sog. Dieseleffekt tritt bei der geringen Tiefe der Kavität nicht ein.

Der geschichtete Aufbau der Spritzgießform gibt ferner die Möglichkeit, die Entlüftungsmittel an den Formplatten, also in einer ihrer Anzahl entsprechenden Häufigkeit auszubilden. Vorzugsweise sind die Entlüftungsmittel zwischen den einander zugekehrten Auflageflächen der Formplatten ausgebildet, beispielsweise durch enge Spalte oder Kanäle. Aufgrund der hohen Fließgeschwindigkeit der Polymerschmelze senkrecht zu solchen engen Spalten oder Kanälen ist trotz des hohen Drucks ein Eindringen der Schmelze in die Entlüftungsquerschnitte verhindert. Die Entlüftungsquerschnitte können deshalb auch größer sein als bei einer zweischaligen Form, deren Formtrennebene in Fließrichtung der Schmelze liegt. Die Entlüftungsquerschnitte können mit einer maximalen Weite von nur wenigen μm bis zu 300μm ausgebildet sein.

Vorzugsweise sind die Entlüftungsmittel ganz oder teilweise durch Oberflächenrauhigkeiten an den einander zugekehrten Flächen der Formplatten gebildet.

In weiterhin vorteilhafter Ausgestaltung weisen die Entlüftungsmittel Entlüftungsquerschnitte auf, die sich ausgehend von der Formkontur des Formkanals nach außen erweitern, so dass die Luft nach Passieren der engsten Stellen der Entlüftungsquerschnitte behinderungsfrei abströmen kann.

Die allein durch den spezifischen Druck im Formkanal erfolgende Verdrängung der Luft kann noch dadurch unterstützt werden, dass die Entlüftungsmittel mit einer externen Unterdruckquelle in Verbindung stehen.

Die Vorrichtung kann so ausgebildet sein, dass der Formkanal einen über seine Länge im wesentlichen gleichbleibenden oder einen sich zu seinem Ende im wesentlichen gleichförmig verjüngenden Querschnitt aufweist, um zylindrische oder leicht konische Borste zu erhalten.

Praktische Spritzversuche unter den angegebenen Verfahrensbedingungen haben gezeigt, dass sich der Formkanal bei linearer Achse mit einem Winkel < 1,0° verjüngen kann, um eine ausreichende Formschräge für das Entformen einer schwach konischen Borste mit hervorragendem Biegeverhalten zu erhalten.

Ferner kann der Formkanal einen sich zum Ende diskontinuierlich verjüngenden Querschnitt aufweisen, um speziell gestaltete Borstenenden in Anpassung an den Verwendungszweck der fertigen Borstenware zu erhalten.

Die größte Weite des Querschnitts des Formkanals beträgt vorzugsweise ≤ 3 mm. Damit werden die für Qualitätsbürsten und Pinsel gewünschten Borstenquerschnitte abgedeckt.

Den Formplatten mit dem Formkanal mit der vorgenannten größten Weite kann an ihrer dem Zuführkanal zugewandten Seite wenigstens eine anspritzseitige Formplatte mit einer sich zum Formkanal verjüngenden Erweiterung vorgeschaltet sein, um einerseits einen verstärkten Querschnitt an der Borstenwurzel und an der Borstenbasis zu erzeugen, andererseits aufgrund dieser Erweiterung im Einlaufbereich des Formkanals eine Dehnströmung zu erhalten, die die Ausbildung der gewünschten Strömungsdynamik unterstützt. Die Erweiterung kann sich trompetenartig zu dem Formkanal verengen, um einen übergangslosen Ansatz der Borste an dem die Borsten verbindenden Träger, Bürstenkörper oder dergleichen zu schaffen, was insbesondere für Hygienebürsten jeder Art von Bedeutung ist.

Das Verhältnis der größten Weite des Querschnitts des Formkanals zu dessen Länge beträgt vorzugsweise zwischen 1:5 und 1:250 kann aber auch bis :1000 reichen, wobei das Verhältnis näher dem höheren Wert liegt, je enger der Querschnitt des Formkanals ist bzw. umgekehrt umso näher dem kleineren Wert liegt, je größer der engste Querschnitt ist.

In weiterer Ausgestaltung ist vorgesehen, dass die Anzahl und Dicke der Formplatten auf die Länge des Formkanals abgestimmt sind, wobei die Anzahl der Formplatten umgekehrt proportional dem Verhältnis von größter lichter Weite des Querschnitts zur Länge des Formkanals ist. Ferner kann die zu einer Spritzgießform gehörende Anzahl der Formplatten variabel sein, um mit derselben Form Borsten variierender Länge herstellen zu können.

Die Formplatten weisen vorzugsweise eine Dicke auf, die etwa das Drei- bis Fünfzehnfache des mittleren Durchmessers des Formkanals beträgt. Für eine Borste mittleren Durchmessers von 0,3 mm und einer Länge von 10,5 mm weisen die Formplatten beispielsweise eine Dicke von 1,5 mm bis 2,00 mm auf. Der in der Formplatte vorhandene Längenabschnitt des Formkanals von 1,5 mm bis 2,0 mm lässt sich sehr präzise bohren.

Die Formplatten können einzeln oder in Gruppen senkrecht zu ihrer Plattenebene bewegbar sein. Hiermit wird insbesondere das Entformen der Borste in einer vom Stand der Technik abweichenden Weise möglich, indem beispielsweise die Formplatten beginnend mit der die Formkontur am Ende des Formkanals aufweisenden Formplatte und endend mit der dem Zuführkanal zugewandten Formplatte einzeln oder in Gruppen zeitlich nacheinander abrückbar sind.

Die Formplatten werden unter dem verfahrensbedingt hohen Schließdruck der Spritzgießmaschine zuverlässig zusammengehalten und sind beim Spritzgießen trotz ihrer geringen Dicke keinen Verformungskräften ausgesetzt sind. Ferner werden die Entlüftungsquerschnitte durch den Schließdruck zugehalten, benötigen insbesondere keine zusätzlichen Zuhalteeinrichtungen, wie dies bei längsbelüfteten Kanälen der Fall ist.

Praktische Versuche haben ergeben, dass bei den vorgesehenen engen Querschnitten und Kanallängen ganz erhebliche Auszugskräfte erforderlich sind, um die Borsten zu entformen, sofern beispielsweise nur zwei Formplatten vorhanden sind. In der Regel reißt die Borste ab. Durch Steigerung der Plattenzahl und deren sukzessives Abrücken voneinander ist ein beschädigungsfreies Entformen der Borste möglich, insbesondere wenn die dem Zuführkanal zugewandte Formplatte zuletzt abgerückt wird. Beim Entformen wirken die Lochränder jeder Formplatte ähnlich einer Ziehdüse, die allfällig vorhandene "Polymerhäute", die sich in der Formtrennebene bilden, ohne nachteilige Folgen für den Borstenmantel glatt verziehen. Die Borstenenden sind ohnehin einwandfrei abgeformt.

Es können ferner einzelne Formplatten parallel zu den benachbarten Formplatten verschiebbar sein, um nach dem Spritzgießvorgang die Borste quer zu beanspruchen und dadurch eine Optimierung der Molekularstruktur zu erzielen.

In weiterhin bevorzugter Ausführung weist die Spritzgießform Formkanäle mit unterschiedlicher Länge und/ oder mit unterschiedlichem Querschnittsverlauf auf, um beispielsweise in einem Spritzgießtakt einen Borstenbesatz der gewünschten Geometrie und Konfiguration zu erhalten.

Gemäß einer weiteren Ausführungsform weist die Spritzgießform Formkanäle mit einer Mittelachse auf, die unter einem gegenüber der Bewegungsrichtung der Formplatten geneigten Winkel verläuft, wobei jede Formplatte einen Längenabschnitt des Formkanals aufweist, dessen Länge so bemessen ist, dass trotz der Winkelabweichung ein Entformen durch sukzessives Abrücken der einzelnen Formplatten möglich ist.

Die Aufteilung der Spritzgießform in eine Mehrzahl von quer zum Formkanal verlaufenden Formplatten gibt die Möglichkeit, den Formkanal in solche Längenabschnitte aufzuteilen, die auch dann, wenn die Borstenachse gegenüber der Bewegungsrichtung der Formplatten (Entformungsrichtung) geneigt ist, noch ein Entformen der einzelnen Längenabschnitte ermöglicht, ohne die Borste zu stark zu beanspruchen oder zu verformen. Auf diese Weise lassen sich in einer einzigen Spritzgießform Borstengruppen herstellen, bei denen die Borsten parallel zueinander, aber winklig zu einem sie verbindenden Borstenträger angeordnet sind oder aber untereinander unterschiedliche Winkelstellungen aufweisen.

Gemäß einer weiteren Ausführung weist die Spritzgießform Formkanäle mit einer Mittelachse auf, die gegenüber der Bewegungsrichtung der Formplatten gekrümmt ist, wobei jede Formplatte einen Längenabschnitt des Formkanals aufweist, der so bemessen ist, dass in Abhängigkeit von der Krümmung ein Entformen durch sukzessives Abheben der einzelnen Formplatten möglich ist.

Auf diese Weise lassen sich beispielsweise gewellte Borsten herstellen, die sich gleichwohl einwandfrei entformen lassen. Auch können in einer einzigen Spritzgießform gleichzeitig gerade, gewellte und gekrümmte Borsten hergestellt werden.

In einer weiteren Ausführungsform weist die Spritzgießform wenigstens eine Formplatte auf, die in ihrer Ebene gegenüber den benachbarten Formplatten verschiebbar ist und zusammen mit diesen nach dem Spritzgießen der Borsten eine auf dem entsprechenden Teil der Länge des Formkanals wirksame Klemmeinrichtung für sämtliche Borsten bildet.

Damit wind die Möglichkeit geschaffen, Teile der Spritzgießform als Halterung für die gespritzten Borsten einzusetzen, um sie in der Spritzgießform nur auf einem Teil ihrer Länge zu fixieren, beispielsweise um die endennahen Formplatten in Entformungsrichtung von den verbleibenden Formplatten abzurücken und die Borstenspritzlinge mitzunehmen, so dass die Borsten auf einer mittleren Teillänge, nämlich zwischen diesen Formplatten und den verbleibenden Formplatten freigestellt werden. Durch anschließendes Verschieben der klemmenden Formplatten und Zurückbewegen der endennahen Formplatten in Richtung des Anspritzendes der Borsten überragen diese Enden die anspritzseitige Formplatte. Durch Umsetzen der Spritzgießform, gegebenenfalls unter weiterhin klemmender Wirkung der Halterung, kann die Spritzgießform mit einem anderen Spritzgießwerkzeug in Verbindung gebracht werden, das eine einem Borstenträger oder Bürstenkörper abformende Formkavität aufweist. In einem weiteren Spritzgießvorgang werden die überstehenden Enden mit einer weiteren, diese Formkavität ausfüllenden Polymerschmelze umspritzt.

Die Klemmeinrichtung kann ferner als Transporthalterung dienen, um die geklemmten Borsten nach dem Entformen aus den anderen Formplatten in eine andere Arbeitsstation zum Verbinden mit einem Bürstenkörper umzusetzen. Dies bietet sich auch dann an, wenn die Borsten bereits über eine Verbindung wie Stege, Gitter oder Borstenträger miteinander verbunden sind. Die klemmende Formplatte befindet sich dann nahe dem Übergang der Borsten zum Borstenträger und wird die Halterung in Entformungsrichtung unter gleichzeitigem Entformen der Verbindung abgerückt und anschließend umgesetzt und werden die als Halterung dienenden Formplatten durch einen gleichen Satz von Formplatten ersetzt, um wieder eine komplette Spritzgießform zu erhalten. Die Halterung kann als Wanderhalterung in einer Umlaufbahn geführt und nach dem vollständigen Entfernen der Borsten auch aus der Halterung wieder zur Ergänzung der Spritzgießform genutzt werden. Sofern die Verbindung nicht unmittelbar für die nächsten Konfektionierungsschritte, z.B. Stecken, Kleben, Schweißen, Umspritzen etc., benötigt wird, kann sie auch abgetrennt werden und können nur die Borsten in einer der bekannten Fügetechniken mit einem Borstenträger oder Bürstenkörper verbunden werden.

In weiterer Ausgestaltung ist vorgesehen, dass die Spritzgießform aus wenigstens zwei Gruppen von Formplatten mit Klemmeinrichtung besteht, von denen die erste Gruppe einen Teil des Formkanals mit dessen Ende und die weiteren Gruppen den restlichen Teil des Formkanals umfassen, wobei die erste Gruppe von der zweiten Gruppe und die nachfolgenden jeweils voneinander zeitlich nacheinander abrückbar sind. Der Spritzgießvorgang wird dann in einer der Anzahl der Gruppen entsprechenden Anzahl von Spritzgießtakten aufgeteilt derart, dass in der geschlossenen Ausgangslage der Spritzgießform die Polymerschmelze in einem ersten Spritgießtakt in den vollständigen Formkanal gespritzt wird, daraufhin die erste Gruppe von den weiteren unter Mitnahme des Spritzlings mittels der Klemmeinrichtung abrückbar ist, wobei der Abrückweg kleiner als die Länge des Spritzlings ist, anschließend in einem zweiten Spritzgießtakt weitere Polymerschmelze in den freigestellten Längenabschnitt des Formkanals der weiteren Gruppen gespritzt wird und die Schritte Spritzen/Abheben wiederholt werden, bis die vorletzte Gruppe von der letzten Gruppe abgerückt ist, um Borsten größerer Länge als die Länge des Formkanals zu erzeugen. Die Herstellung der Borste erfolgt also abschnittsweise und ermöglicht die Herstellung von Borsten größerer Längen.

Bei dieser Ausbildung der Vorrichtung kann auch in jedem Spritzgießtakt eine andere Polymerschmelze gespritzt werden, so dass eine über die Borstenlänge mehrkomponentige Borste erhalten werden kann, bei der die in jeder Stufe eingesetzten Polymere auf das Anforderungsprofil der Borste und ihrer Anbindung an den Borstenträger abgestimmt werden können. Auf diese Weise wird eine Mehrbereichsborste erhalten. Die Abrückbewegungen der einzelnen Gruppen können nach dem Spritzgießtakt in kurzem zeitlichem Abstand, bei dem der Spritzling so weit abgekühlt ist, dass er bei der Abrückbewegung aus den verbleibenden Formplatten entformt wird, erfolgen. Die Verbindung zwischen den einzelnen Bereichen erfolgt vorzugsweise stoffschlüssig, kann aber auch form- oder kraftschlüssig durch entsprechende Profilierung des Endes der zuletzt gespritzten Teillänge erfolgen.

Vorzugsweise ist die das Borstenende und die Formkontur am Ende des Formkanals aufweisende Formplatte gegen eine Formplatte mit anderer Formkontur zur Erzeugung von Borsten mit unterschiedlich geformten Enden auswechselbar. Diese Formplatte sollte nur flache Konturen enthalten, um das für den Gebrauchszweck maßgebliche Borstenende einwandfrei entformen zu können.

Auf diese Weise kann bei ansonsten gleichbleibender Geometrie der Borsten deren Endenkontur variiert werden, beispielsweise spitze oder mehr oder minder gerundete Enden oder auch Borsten mit gegliedertem Ende (zwei Spitzen oder dergleichen) hergestellt werden. Auch kann diese Formplatte unterschiedlich tiefe Längenabschnitte des Formkanals aufweisen, um bei einem Borstenbesatz eine konturierte Hüllfläche für die Borstenenden zu bilden.

Vorzugsweise ist zwischen dem Zuführkanal und den Formkanälen der Spritzgießform eine zwei oder mehr Formkanäle verbindende Formkavität zur Ausbildung einer Verbindung der Borsten untereinander angeordnet, die gegebenenfalls auch alle Borsten verbinden kann. Sie kann entweder als Hilfsmittel für die weitere Handhabung des gesamten Borstenbesatzes oder als Hilfsmittel für die Vervollständigung des Borstenbesatzes mit einem Bürstenkörper dienen.

Die Formkavität kann ferner zur Erzeugung eines Bürsten-oder Pinselkörpers oder eines Teils desselben ausgebildet sein.

Dabei kann insbesondere die Formkavität zur Erzeugung eines Bürsten- oder Pinselkörpers oder eines Teils desselben in einer Mehrkomponentenausführung aus unterschiedlichen Polymeren ausgebildet sein.

Nachstehend ist die Erfindung anhand von in der Zeichnung wiedergegebenen Ausführungsbeispielen beschrieben. In der Zeichnung zeigen:

Fig. 1                             eine schematische Ansicht einer Borste zur Definition der Borstenbereiche und-abschnitte,

Fig. 2A                          eine schematische Ansicht einer Borste gemäß einem ersten Ausführungsbeispiel in stark vergrößerter Darstellung,

Fig. 2B                          eine Aufsicht der Borste gemäß Fig. 2A,

Fig. 3A          eine Ansicht einer gegenüber der Borste gemäß Fig. 2A abgewandelten Borste,

Fig. 3B          den Schnitt IIIB-IIIB in Fig. 3A,

Fig. 3C          den Schnitt IIIC-IIIC in Fig. 3A,

Fig. 4A          eine Seitenansicht einer weiteren Ausführungsform einer Borste,

Fig. 4B          den Schnitt IVB-IVB in Fig. 4A,

Fig. 4C          den Schnitt IVC-IVC in Fig. 4A,

Fig. 5A          eine Seitenansicht einer weiteren Ausführungsform einer Borste,

Fig. 5B          den Schnitt VB-VB in Fig. 5A,

Fig. 5C          den Schnitt VC-VC in Fig. 5A,

Fig. 6A          eine Ansicht einer weiteren Ausführungsform der Borste,

Fig. 6B          den Schnitt VIB-VIB in Fig. 6A,

Fig. 7A          eine Ansicht einer weiteren Ausführungsform der Borste,

Fig. 7B          den Schnitt VIIB-VIIB in Fig. 7A,

Fig. 8A          eine Abwandlung der Borste gemäß Fig. 7A,

Fig. 8B          den Schnitt VIIIB-VIIIB in Fig. 8A,

Fig. 8C          den Schnitt VIIIC-VIIIC in Fig. 8A,

Fig. 9           eine alternative Ausgestaltung der Borste,

Fig. 10          eine Borste insbesondere für eine Applikationsbürste,

Fig. 11          eine Borste mit profiliertem Spitzenabschnitt t,

Fig. 12          eine weitere Ausgestaltung der Borste,

Fig. 13          eine Borste, die aus Teilstücken unterschiedlichen Materials aufgebaut ist,

Fig. 14          eine Weiterentwicklung der Borste gemäß Fig. 13,

Fig. 15A         eine Seitenansicht einer Borste mit zylindrischer Hüllfläche,

Fig. 15B         eine Aufsicht der Borste gemäß Fig. 15A,

Fig. 16A         die Borste gemäß Fig. 15A mit einer abschnittsweisen Beschichtung,

Fig. 16B         eine Aufsicht der Borste gemäß Fig. 16A,

Fig. 17A         eine Seitenansicht einer Borste mit innerem axialen Hohlkanal,

| | |
|---|---|
| Fig. 17B | eine Aufsicht der Borste gemäß Fig. 17A, |
| Fig. 18A | eine alternative Ausgestaltung einer Borste mit einem inneren Hohlkanal, |
| Fig. 18B | eine Aufsicht der Borste gemäß Fig. 18A, |
| Fig. 19A | eine Abwandlung der Borste gemäß Fig. 18A, |
| Fig. 19B | eine Aufsicht der Borste gemäß Fig. 19A, |
| Fig. 20A | eine Borste mit axialen Fingern im Spitzenabschnitt, |
| Fig. 20B | eine Aufsicht auf die Borste gemäß Fig. 20A, |
| Fig. 21A | eine Seitenansicht des freien Endes einer Borste mit einem axialen Profilelement, |
| Fig. 21B | eine Aufsicht auf die Borste gemäß Fig. 21A, |
| Fig.21C,21D; 21E,21F,21G, 21H,21I,21J, 21K,21L,21M | jeweils eine Aufsicht entsprechend gemäß Fig. 21B mit Alternativen für das Profilelement, |
| Fig. 22A | eine Ansicht einer weiteren Ausführungsform der Borste, |
| Fig. 22B | eine Aufsicht der Borste gemäß Fig. 22A, |
| Fig. 23A | eine Ansicht einer weiteren Ausführungsform der Borste, |
| Fig. 23B | eine Aufsicht der Borste gemäß Fig. 23A, |
| Fig. 24A | eine Ansicht einer weiteren Ausführungsform der Borste, |
| Fig. 24B | eine Aufsicht der Borste gemäß Fig. 24A, |
| Fig. 25A | eine Ansicht einer weiteren Ausführungsform der Borste, |
| Fig. 25B | eine Aufsicht der Borste gemäß Fig. 25A, |
| Fig. 26 | einen Längsschnitt durch eine Borste gemäß einer alternativen Ausführung, |
| Fig. 27A | eine schematische Ansicht einer konischen Borste im Maßstab 2:1 mit Vermaßung, |
| Fig. 27B | eine schematische Ansicht einer konischen Borste im Maßstab 5:1 mit Vermaßung, |
| Fig. 28 | eine vergleichende, schematische Darstellung der Geschwindigkeitsprofile in einer Extrusionsdüse und in einem Formkanal, |
| Fig.29,30,31 und 32 | je einen schematischen Längsschnitt eines Ausführungsbeispiels einer Spritzgießform in verschiedenen Betriebsphasen; |

| Fig. 33 | einen schematischen Längsschnitt eines weiteren Ausführungsbeispiels anhand der Spritzgießform; |
|---|---|
| Fig. 34 | ein vergrößertes Detail der Spritzgießform gemäß Fig.33 im Bereich eines außen liegenden Formkanals; |
| Fig.35,36,37 38,39 | je einen schematischen Längsschnitt eines abgewandelten Ausführungsbeispiels einer Spritzgießform in verschiedenen Betriebsphasen; |
| Fig.40,41,42 | je einen schematischen Längsschnitt eines weiteren Ausführungsbeispiels der Spritzgießform in verschiedenen Betriebsphasen; |
| Fig. 43 | einen den Fig.40 bis 42 entsprechenden Längsschnitt der Spritzgießform mit einer diese ergänzenden Form; |
| Fig.44,45 | je einen Längsschnitt einer Spritzgießform in einer weiterhin abgewandelten Ausführung in zwei Betriebsphasen; |
| Fig.46,47 | je einen Längsschnitt entsprechend den Fig.44, 45 mit einer konturierten Schubplatte; |
| Fig.48,49 | je einen Längsschnitt entsprechend Fig.44, 45 mit einer anderen Form des Spritzlings; |
| Fig. 50 | einen schematischen Längsschnitt einer Spritzgießform zur Herstellung von Borsten unterschiedlicher Längserstreckkung und |
| Fig. 51 | einen schematischen Schnitt einer Spritzgießform zur Herstellung von Borsten mit gegliederten Borstenenden; |

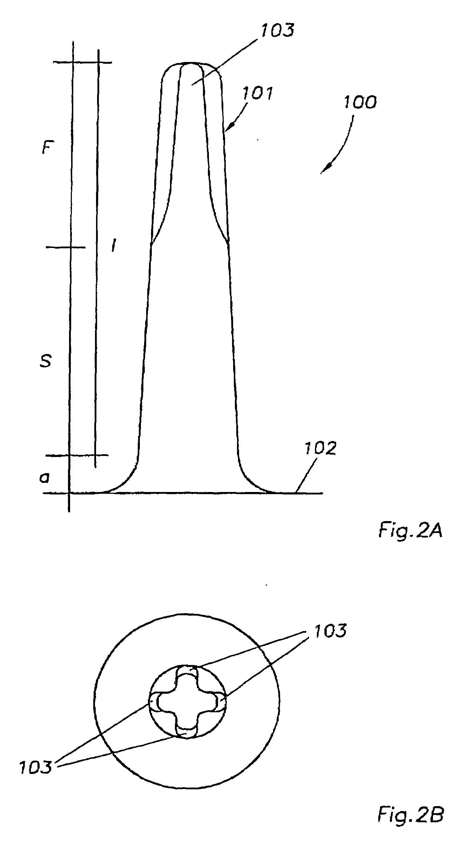

Die Fig. 2A und 2B zeigen eine einzelne Borste 100, wie sie insbesondere für Hygienebürsten, z.B. Zahnbürsten, Reinigungsbürsten im medizinischen Bereich oder im Krankenhausbereich oder auch als Reinigungs- oder Auftragsbürsten in der Nahrungsmittelindustrie eingesetzt werden können. Die Borste 100 besitzt in ihrem Wurzelbereich a eine trompetenartige, nach unten gerichtete Erweiterung mit konkav ausgerundeten Flanken, wodurch eine gute Befestigung an einer Fläche 102 eines Bürstenkörpers gegeben ist. Die Borste 100 besitzt auf ihrer freien Länge L eine sich konisch verjüngende Hüllfläche, wobei der Schaftbereich S über seine gesamte Länge einen kreisförmigen Querschnitt mit einer kontinuierlichen, glatten, vertiefungsfreien Mantelfläche besitzt. In dem Flex-Bereich F ist eine Profilierung 101 ausgebildet, wobei die Borste 100 in diesem Bereich gemäß Fig. 2B einen kreuzförmigen Querschnitt besitzt, so dass vier über den Umfang verteilte axiale Rippen 103 gebildet sind, die auf ihrer Außenseite abgerundet sind und sich bis zum freien Ende der Borste 100 erstrecken. Dabei ist zwischen der Außenseite der Rippen 103 und der Oberfläche des Schaftbereichs S ein glatter, stufenloser Übergang gegeben. Im Bereich ihres freien Endes ist die Borste 100 abgerundet.

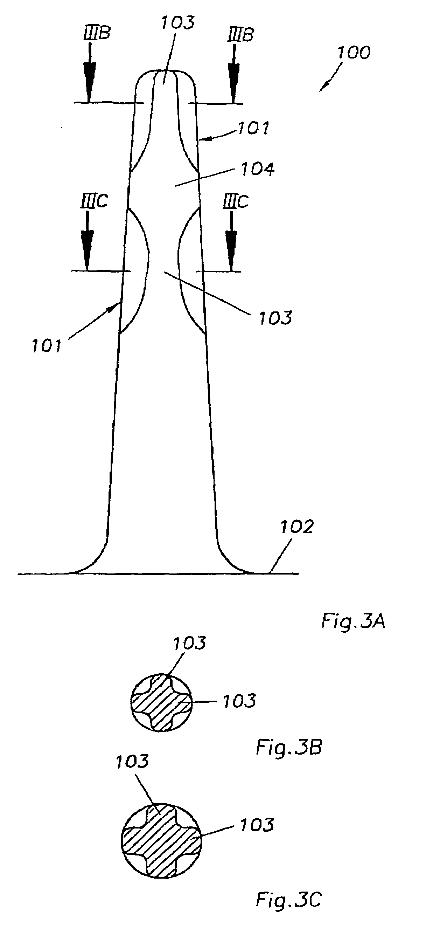

Die Fig. 3A, 3B und 3C zeigen eine Weiterbildung der Borste gemäß Fig. 2A, die sich von dieser lediglich dadurch unterscheidet, dass die die Profilierung 101 bildenden Rippen 103 in einem mittleren Abschnitt 104 mit einer umlaufenden glatten, abstufungs- und vertiefungsfreien Oberfläche zusammengefasst sind, so dass zwei axial beabstandete Profilierung 101 der genannten Art gebildet sind, zwischen denen der mittlere Abschnitt 104 mit glatter, vertiefungsfreier Mantelfläche angeordnet ist. Auch hierbei ist vorgesehen, dass die Oberfläche der Rippen 103 glatt und stufenlos in die vertiefungsfreie Mantelfläche des Abschnitts 104 bzw. des Schaftbereichs übergeht.

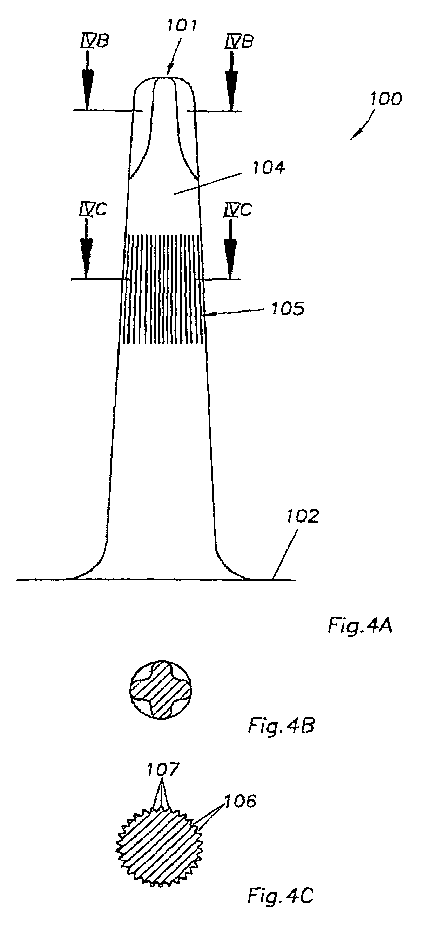

Die Borste 100 gemäß den Fig. 4A, 4B und 4C besitzt im oberen Bereich des Wirk- und Flexabschnitts sowie im Spitzenabschnitt die genannte Profilierung 101 mit kreuzförmigem Querschnitt (Fig. 4B). Unterhalb der Profilierung 101 ist ein Abschnitt 104 mit glatter, vertiefungsfreier Mantelfläche vorgesehen. Unterhalb dieses Abschnitts 104 ist eine weitere Profilierung 105 ausgebildet, die eine Vielzahl von axial verlaufenden Nuten 106 umfasst, die in einem dichten Abstand nebeneinander um den Umfang der Borste herum angeordnet sind. Zwischen zwei benachbarten Nuten 106 ist jeweils eine spitzwinklige Kante 107 gebildet, wie Fig. 4C zeigt.

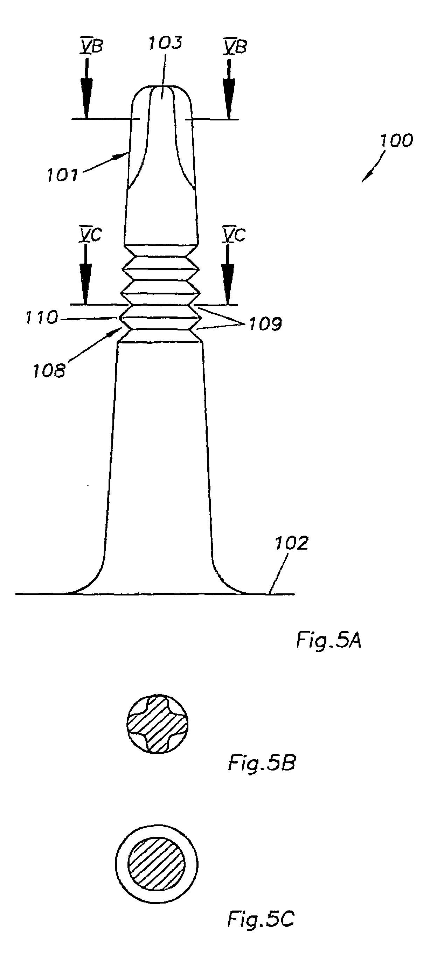

Die Borste 100 gemäß den Fig. 5A, 5B und 5C unterscheidet sich von der Borste gemäß Fig. 4A lediglich dadurch, dass als weitere Profilierung 108 eine Anordnung von mehreren horizontalen, um den Umfang der Borste umlaufenden Nuten 109 gebildet ist, die jeweils einen V-Querschnitt besitzen, wobei zwischen übereinander angeordneten Nuten 109 jeweils eine umlaufende, radiale spitzwinklige Kante 110 gebildet ist.

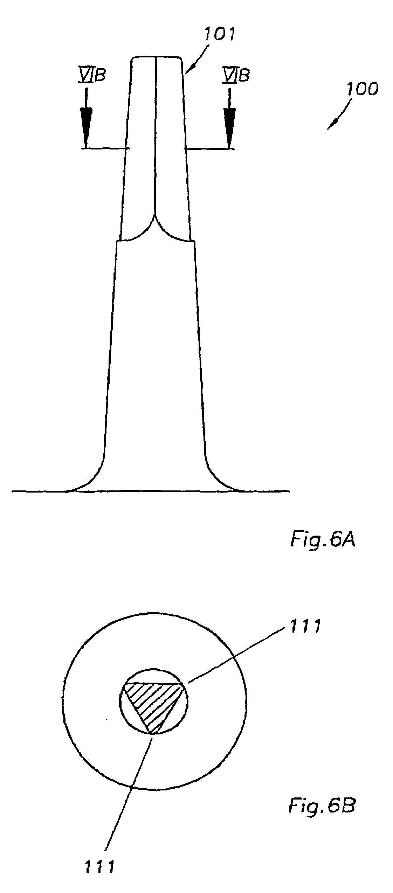

Die Fig. 6A und 6B zeigen eine Abwandlung der Borste gemäß Fig. 2A und unterscheiden sich von dieser lediglich dadurch, dass die Profilierung 101 statt eines kreuzförmigen nunmehr einen dreieckförmigen Querschnitt besitzt (siehe Fig. 6B), so dass über den Umfang der Borste drei axiale, spitzwinklige Kanten 111 verteilt sind. Der dreieckförmige Querschnitt erstreckt sich bis zum freien Ende der Borste 100.

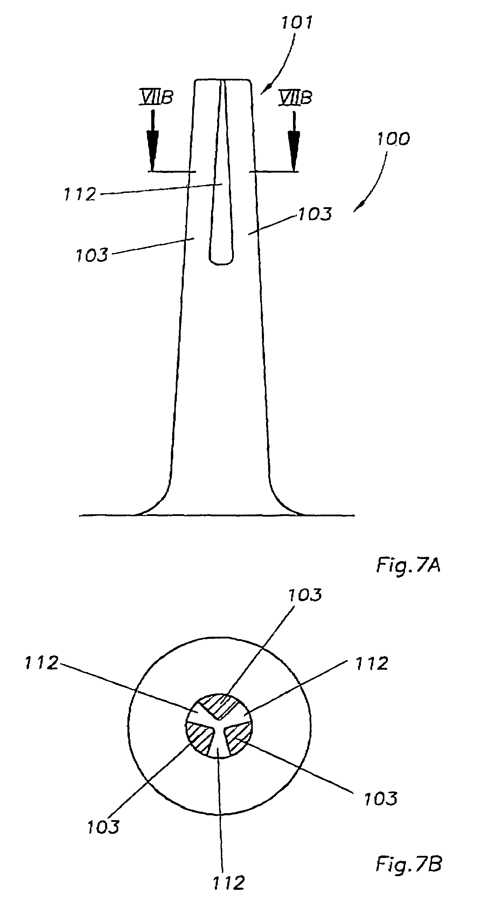

Eine weitere Alternative der Querschnittsgestaltung der Profilierung ist in den Fig. 7A und 7B gezeigt. Gemäß dieser Ausführungsform besitzt die Borste 100 im Bereich ihrer Profilierung 101 einen von drei axial nach oben auskragenden Rippen 103 gebildeten Querschnitt, wobei jede Rippe die Querschnittsform eines Kreisausschnittes besitzt und zwischen den Rippen 103 ein Zwischenraum 112 gebildet ist, so dass die Rippen 103 außer in ihrem Fußbereich miteinander nicht verbunden sind.

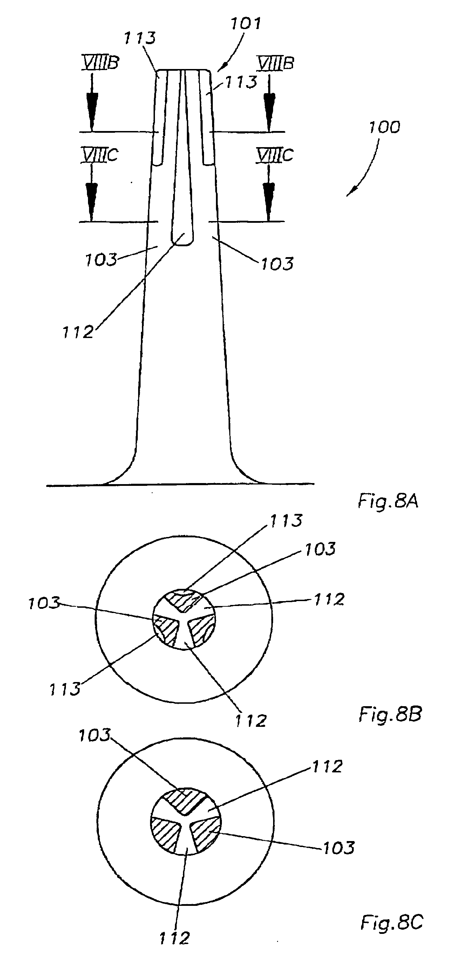

Die Fig. 8A, 8B und 8C zeigen eine Weiterbildung der Ausgestaltung gemäß Fig. 7A und unterscheidet sich von dieser lediglich dadurch, dass die Rippen 103 im oberen Teilbereich ihrer axialen Länge eine außenseitige, in Längsrichtung der Borste 100 verlaufende Ausnehmung 113 mit konkavem Querschnitt aufweisen, die sich bis zum oberen freien Ende der Borste 100 erstreckt.

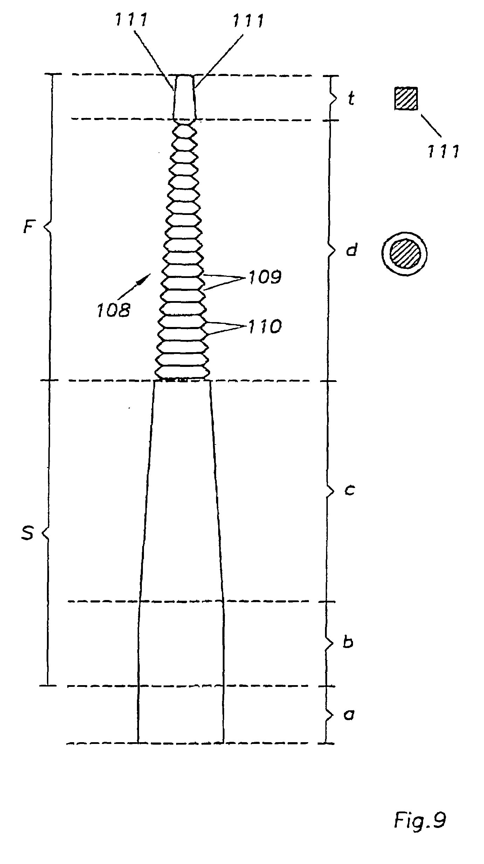

Bei den vorgenannten Ausführungsbeispielen besitzt die Borste immer einen sich kontinuierlich zur Spitze verjüngenden Querschnitt, wobei die Querschnittsabmessungen der Borste im Bereich ihrer freien Länge in keinem Querschnitt größer als die Querschnittsabmessungen des unteren Querschnitts des Schaft-Basisabschnitts b sind, mit dem dieser in den darunterliegenden Wurzelbereich a übergeht. Fig. 9 zeigt ein Ausführungsbeispiel, bei dem der Schaft-Basis-abschnitt b eine zylindrische Form besitzt und sich die darüberliegenden Abschnitte, d.h. der Schaftabschnitt c der Wirk- und Flexabschnitt d und der Spitzenabschnitt t zur Spitze hin verjüngen. Dabei ist darüber hinaus vorgesehen, dass der gesamte Wirk- und Flexabschnitt d eine Profilierung 108 trägt, die durch eine Vielzahl von horizontalen, um die Borste 100 umlaufenden Nuten 109 und dazwischenliegenden umlaufenden spitzwinkligen Kanten 110 gebildet ist. Wie Fig. 9 zeigt, besitzt die Borste im Bereich des Wirk- und Flexabschnitts d einen Kreisquerschnitt, während sie in ihrem oberen Spitzenabschnitt t mit einem Quadratquerschnitt ausgestattet ist, so dass dort vier spitzwinklige, axiale Kanten 111 gebildet sind.

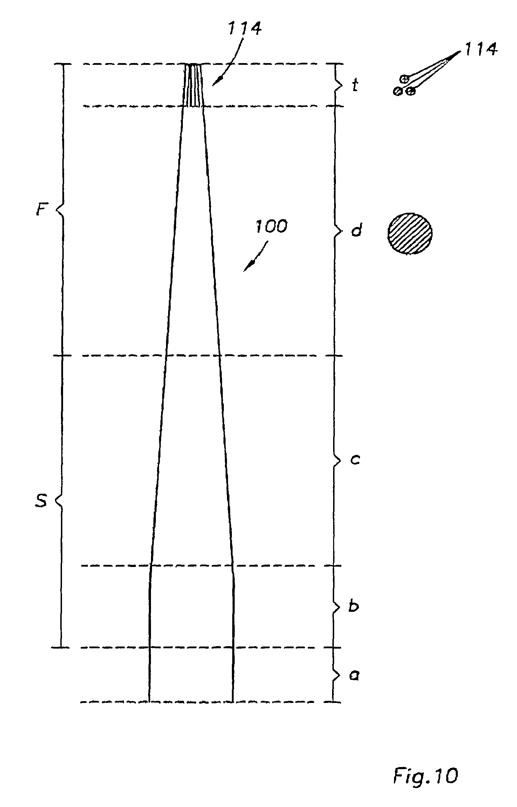

Die Borste 100 gemäß Fig. 10 besitzt in ihrem gesamten Schaftbereich S und ihrem Wirk- und Flexabschnitt d einen Kreisquerschnitt mit glatter, vertiefungsfreier Mantelfläche, wobei in dem Schaftabschnitt c und dem Wirk- und Flexabschnitt d eine Konizität gegeben ist. Der Spitzenabschnitt t ist durch drei sich axial nach oben erstreckende angeformte Finger 114 gebildet, wobei hier drei Finger vorgesehen sind, die in den Eckpunkten eines im wesentlichen gleichseitigen Dreiecks angeordnet sind.

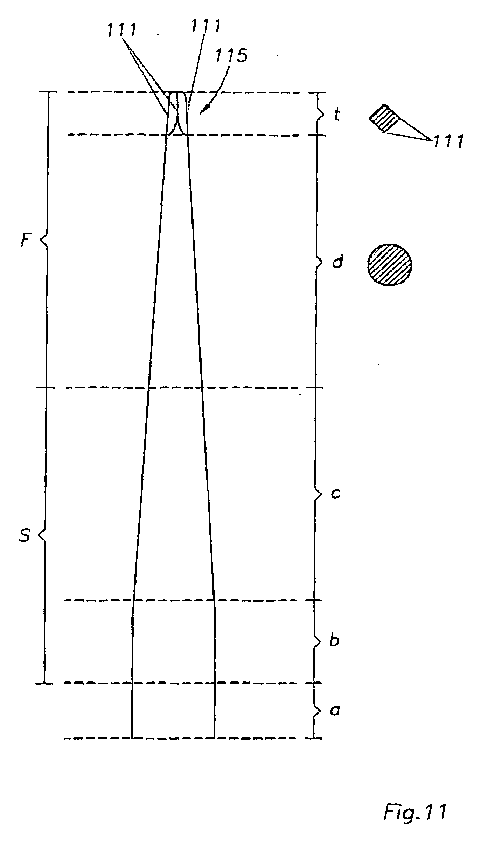

Die Borste 100 gemäß Fig. 11 unterscheidet sich von der Borste gemäß Fig. 10 in der Ausgestaltung des Spitzenabschnitts t. Statt der Finger 114 ist nunmehr vorgesehene, dass der Spitzenabschnitt t eine Profilierung 115 in Form eines quadratischen bzw. rautenförmigen Querschnitts besitzt, so dass vier axiale spitzwinklige Kanten 111 gebildet sind. Außerhalb des Spitzenabschnitts t ist die Borste unprofiliert und mit einer glatten, vertiefungsfreien Mantelfläche ausgebildet.

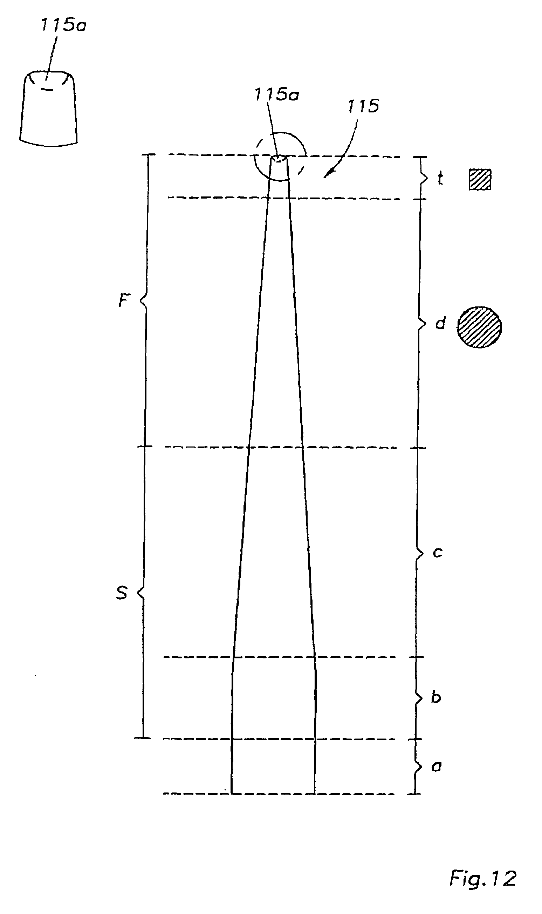

Während bei der Ausgestaltung gemäß Fig. 11 der gesamte Spitzenabschnitt t mit der Profilierung 115 versehen ist, zeigt Fig. 12 eine Ausgestaltung, bei der zusätzlich an dem freien Ende der Borste eine nach oben weisende Ausnehmung 115a mit konkavem Querschnitt ausgebildet ist, deren umlaufender Rand zusätzlich als Profilierung dient.

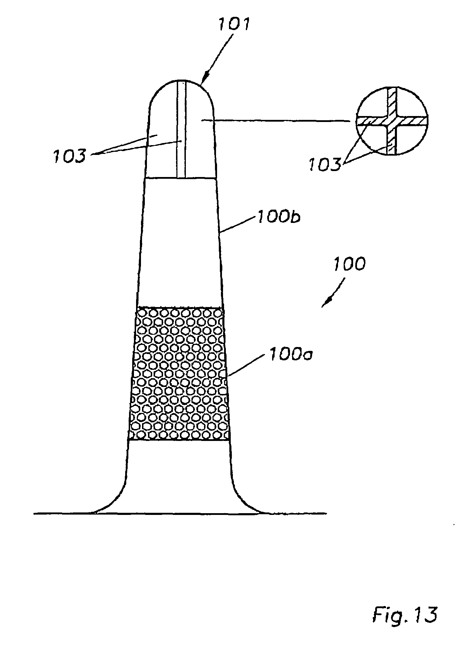

Fig. 13 zeigt eine Borste 100, die aus axial aufeinanderfolgenden Abschnitten oder Teilstücken 100a und 100b aus unterschiedlichen Materialien aufgebaut ist. Ein erster Abschnitt 100a bildet dabei den Schaftbereich S, d.h. den Schaft-Basisabschnitt b und den Schaftabschnitt c, und besteht aus einem aufgeschäumten Material, das eine oberflächliche Rauhigkeit besitzen kann. Oberhalb von diesem ist ein zweiter Abschnitt 100b vorgesehen, der den Wirk-und Flexabschnitt d und den Spitzenabschnitt c bildet und aus einem nicht-geschäumten Material besteht. Dabei trägt der Spitzenabschnitt t sowie der obere Bereich des Wirk-und Flexabschnitts d eine Profilierung 101 in Form eines kreuzförmigen Querschnittes mit vier über den Umfang der Borsten verteilten Rippen 103.

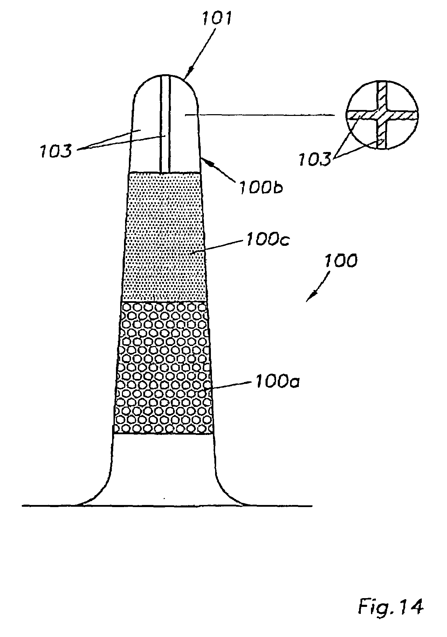

Fig. 14 zeigt eine Weiterbildung der Borste gemäß Fig. 13, wobei hier ein dritter Abschnitt 100c vorgesehen ist, der den Wirk- und Flexabschnitt d bildet und aus einem Material besteht, dass mit einem Additiv oder einem Stoff zur antimikrobiellen Ausrüstung gefüllt ist und ebenfalls eine oberflächliche Rauhigkeit besitzen kann.

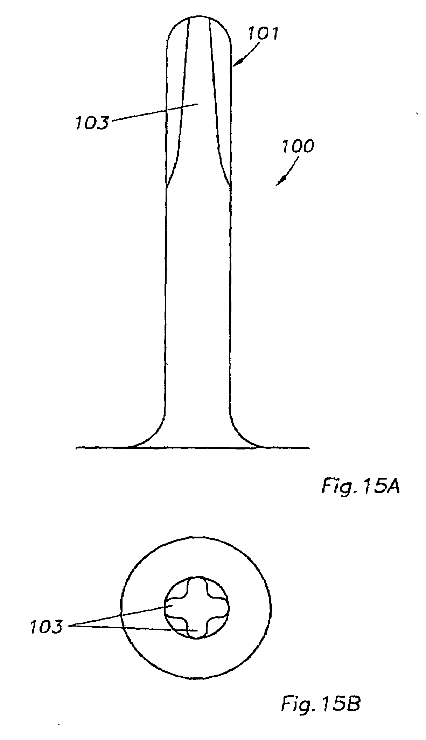

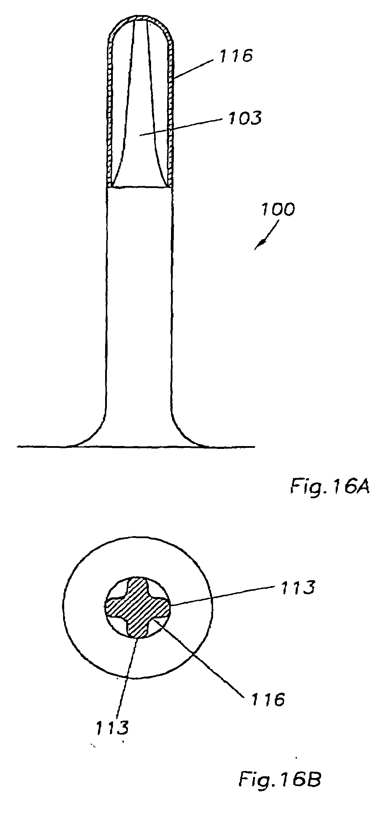

Während bei den bisher beschriebenen Ausführungsbeispielen die Borste zumindest auf Teilbereichen ihrer Länge eine sich zum freien Ende hin verjüngende Konizität besitzt, zeigen die Fig. 15A und 15B eine Borste 100, die eine zylindrische Hüllfläche hat, wobei im Bereich des Spitzenabschnittes sowie zumindest im oberen Bereich des Wirk- und Flexabschnittes eine Profilierung 101 entsprechend der Borste gemäß Fig. 2A ausgebildet ist. Gemäß einer Weiterbildung, wie sie in Fig. 16A und 16B gezeigt ist, besitzt die Profilierung 101 eine außenseitige Beschichtung 116, die die Außenoberfläche der Borste 100 im Bereich der Profilierung 101 vollständig umgibt.

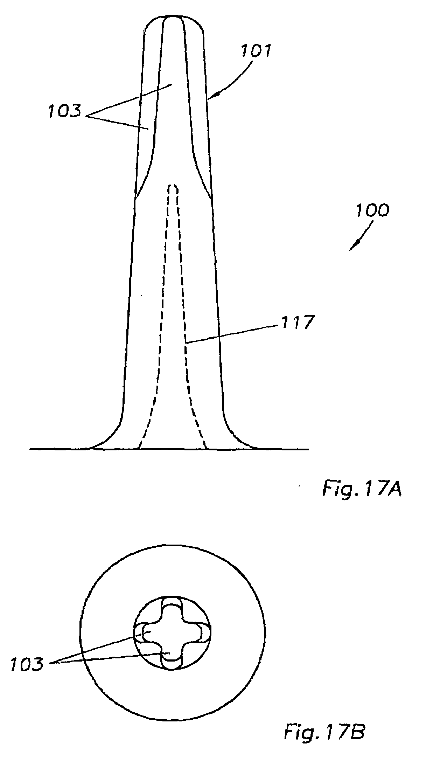

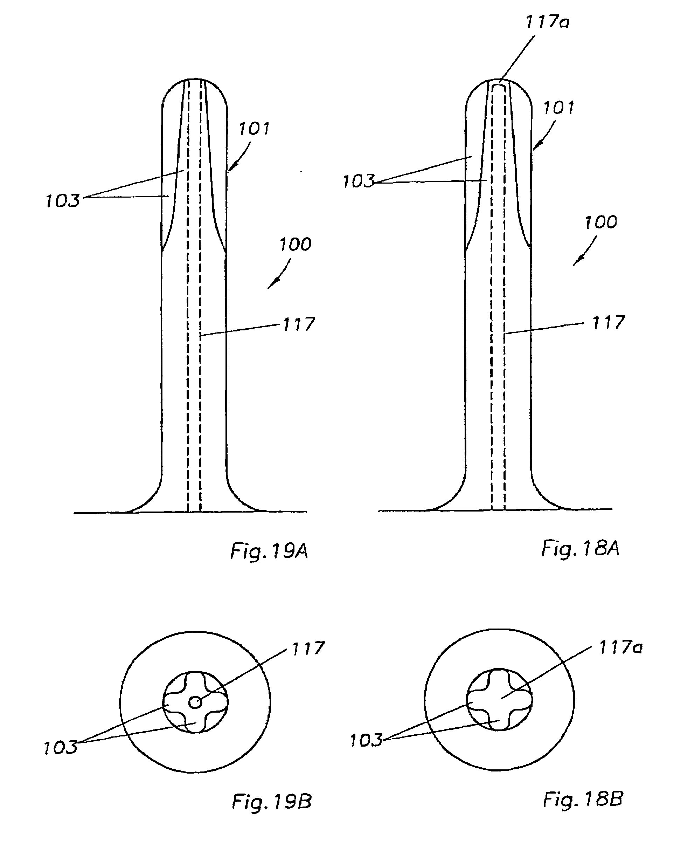

Die Fig. 17A und 17B zeigen eine Weiterbildung der Borste gemäß Fig. 2A und unterscheiden sich von dieser lediglich dadurch, dass die Borste 100 einen sich in Längsrichtung erstreckenden, axialen Hohlkanal 117 aufweist, der ausgehend vom unteren Ende des Wurzelbereichs sich bis etwa zur halben Höhe der Borste erstreckt. Der axiale Hohlkanal 117 kann mit Wirkstoffen, beispielsweise Natriumfluorid, Xylit oder anderen organischen oder anorganischen Materialien gefüllt sein und diese im Laufe der Gebrauchsdauer der Borste allmählich an deren Oberfläche abgeben. Während gemäß Fig. 17A sich der Hohlraum nur bis zum unteren Ende der Strukturierung 101 erstreckt, zeigen die Fig. 18A und 18B eine Borste 100 mit zylindrischer Hüllfläche, die einen axialen Hohlkanal 117 besitzt, der sich annähernd über die gesamte Länge der Borste bis kurz unterhalb des freien Endes erstreckt. An der Stirnfläche des Hohlkanals im Bereich des freien Endes der Borste ist durch das Borstenmaterial eine dünne Verschlussmembran 117a gebildet, durch die der im Hohlkanal 117 befindliche Wirkstoff ausgetragen werden kann.

In Weiterbildung der Borste gemäß Fig. 18A ist in den Fig. 19A und 19B eine Borste gezeigt, bei der der Hohlkanal 117 sich durch die gesamte Borste erstreckt und an deren freien Ende im Spitzenabschnitt mündet.

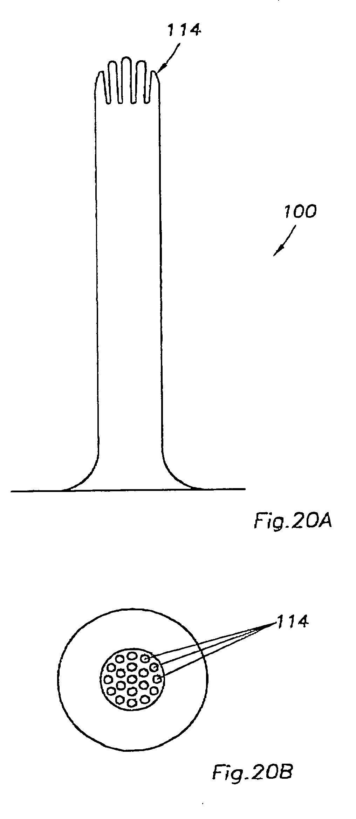

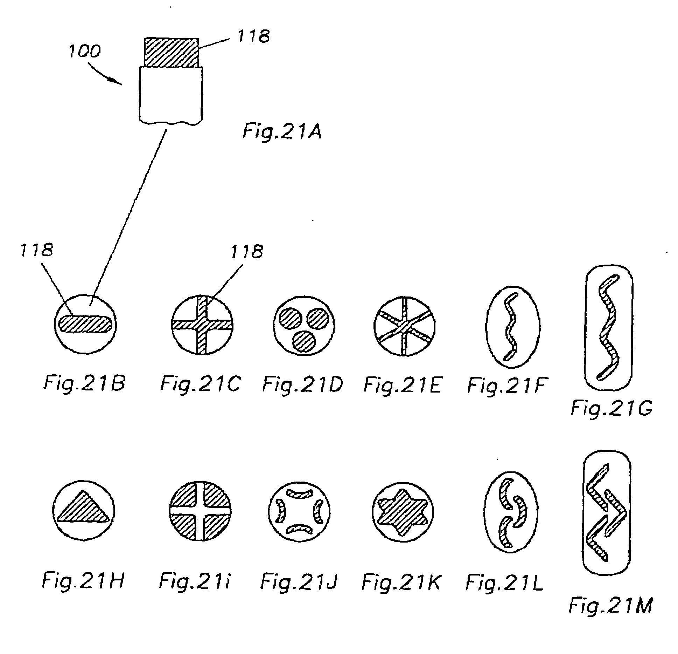

Die Fig. 20A und 20B zeigen eine Borste 100, die bis auf den Spitzenabschnitt eine gleichmäßige zylindrische Gestalt besitzt und bei der der Spitzenabschnitt von einer Vielzahl von sich axial nach oben erstreckenden, angeformten Fingern 114 gebildet ist. Statt der Vielzahl von parallelen angeformten Fingern 114 kann der Spitzenabschnitt auch von einem einteiligen oder mehrteiligen Profilelement 118 gebildet sein, wie es in den Fig. 21A bis 21M gezeigt ist. Bei der Ausgestaltung gemäß Fig. 21A und 21B ist das Profilelement 118 von einer vertikalen, im wesentlichen rechteckigen Wand mit abgerundeten Stirnseiten gebildet. Alternativ kann jedoch auch vorgesehen sein, gemäß Fig. 21C zwei entsprechend senkrecht zueinander angeordnete, sich durchdringende Wände unter Bildung eines Kreuzquerschnittes vorzusehen. Fig. 21D zeigt das Profilelement als drei an ihrem unteren Ende eingespannte, axial frei auskragende angeformte Stifte mit Kreisquerschnitt. Fig. 21E zeigt ein Profilelement in Form von drei im Querschnitt sternförmig angeordneten, sich kreuzenden Wänden.

Statt gemäß Fig. 21A eine im wesentlichen geradlinige Wand vorzusehen, zeigt Fig. 21F eine gekrümmte dünne Wand mit einem schlangenlinienförmigen bzw. Doppel-S-Querschnitt. Dabei besitzt der unterhalb des Profilelementes 118 liegende Wirk- und Flexabschnitt nicht wie in den bisherigen Fällen einen Kreisquerschnitt, sondern einen ovalen Querschnitt. Fig. 21G zeigt eine Fig. 21F entsprechende Ausgestaltung mit dem Unterschied, dass der das Profilelement 118 tragende Wirk- und Flexabschnitt nunmehr einen rechtekkigen Querschnitt mit abgerundeten Kanten aufweist.

Gemäß Fig. 21H besitzt das Profilelement einen dreieckförmigen Querschnitt mit drei außenliegenden spitzwinkligen Kanten. Das Profilelement gemäß Fig. 21I ist aus einem Vollquerschnitt durch Ausbildung zweier senkrecht aufeinanderliegender axialer Schlitze gebildet, so dass vier unabhängige vertikale Stifte mit jeweils einem Kreissegmentquerschnitt gebildet sind.

Gemäß Fig. 21J ist der Spitzenabschnitt von vier über den Umfang verteilten, radial nach außen konkav ausgebildeten Wänden gebildet, die in ihren Endbereichen jeweils Wirkkanten besitzen.

Fig. 21K zeigt ein Profilelement 118 mit einem sternförmigen Querschnitt, d.h. einen inneren Kern, der außenseitig mit axialen Nuten ausgebildet ist, die zwischen sich nach außen weisende spitzwinklige Kanten bilden.

Fig. 21L zeigt einen Wirk- und Flexabschnitt mit ovalem Querschnitt, auf dem drei kurze gekrümmte Wände angeordnet sind, die mit ihren konvexen Oberflächen radial nach außen gerichtet sind, wobei zwei der Wände nebeneinander und die dritte Wand seitlich versetzt zu diesen angeordnet ist. Fig. 21M zeigt eine Abwandlung dieser Ausgestaltung, wobei der Wirk- und Flexabschnitt einen rechteckigen Querschnitt mit abgerundeten Kanten besitzt und die die Profilelemente 118 bildenden Wände L-förmig mit radial nach außen gerichteter Abwinklung ausgebildet sind.

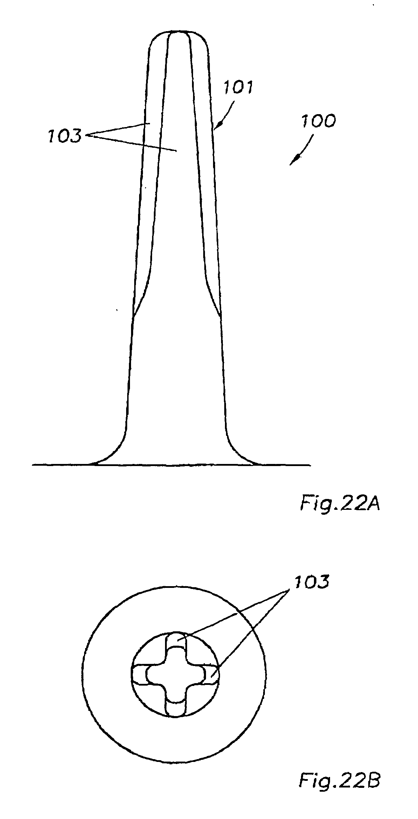

Die Fig. 22A und 22B zeigen eine Abwandlung der Borste gemäß Fig. 2A mit dem Unterschied, dass die Profilierung 101 sich nunmehr nicht nur im Spitzenabschnitt und im Wirk- und Flexabschnitt, sondern auch im oberen Bereich des Schaftabschnittes ausgebildet ist. Der Schaft-Basisab-schnitt sowie der daran angrenzende untere Bereich des Schaftabschnittes sind weiterhin mit einer kontinuierlichen, glatten, vertiefungsfreien Mantelfläche ausgestaltet.

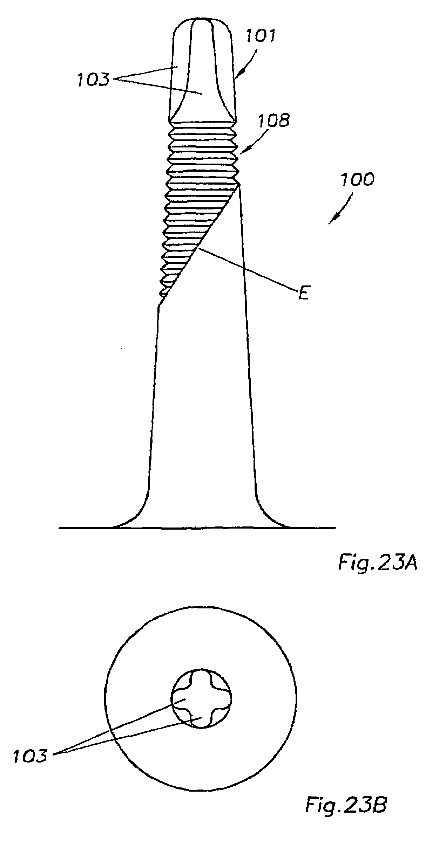

Bei den bisher erläuterten Ausführungsbeispielen lag der Übergang zwischen der unprofilierten Mantelfläche und der Profilierung immer in einer Ebene, die im wesentlichen senkrecht zur Längsachse der Borste verläuft. Dies hat zur Folge, dass die Borste unabhängig von ihrer Ausrichtung in Umfangsrichtung gleichartige Gebrauchseigenschaften besitzt. Fig. 23A und 23B zeigen eine Borste, bei der der Übergang zwischen der unteren unprofilierten Mantelfläche und der oberen Profilierung 108, die in Form einer Vielzahl von horizontalen, umlaufenden Nuten gebildet ist und oberhalb von der eine weitere Profilierung 101 mit kreuzförmigem Querschnitt und axialen Rippen 103 angeordnet ist, in einer Ebene E erfolgt, die die schräg zur Längsachse der Borste verläuft. Im dargestellten Ausführungsbeispiel besitzt die Ebene E eine Neigung von ca. 45°. Dies hat zur Folge, dass die Borste auf der gemäß Fig. 23A linken Seite über einen größeren Bereich ihrer Länge eine Profilierung trägt als auf der gemäß der Fig. 23A rechten Seite, so dass die Putz- und Reinigungseigenschaften der Borste davon abhängig sind, in welcher Orientierung sie auf einem Borstenträger angeordnet wird.

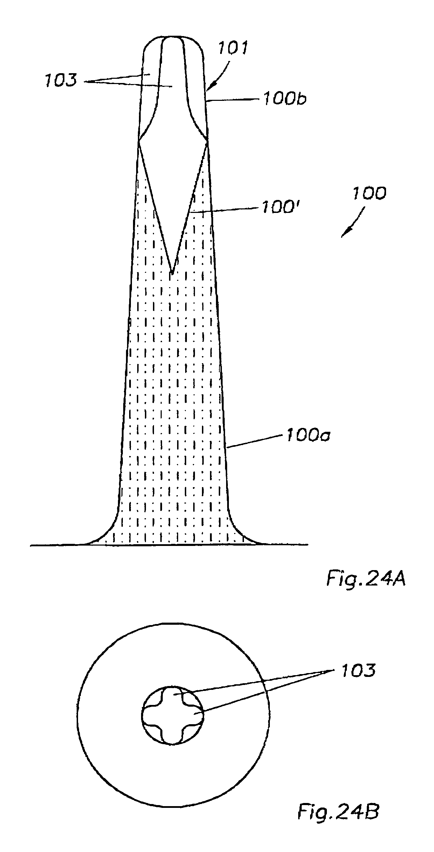

Die Fig. 24A und 24B zeigen eine Abwandlung der Borste gemäß Fig. 13. Auch hierbei besteht die Borste 100 aus mehreren Teilstücken 100a und 100b aus verschiedenen Materialien, wobei das untere Teilstück 100a eine oberflächliche Rauhigkeit besitzen kann. Die Verbindung zwischen den beiden Teilstücken 100a und 100b ist in einer trichtermantelförmigen Kontaktfläche 100' erreicht, die auch bei relativ geringen Borstenabmessungen eine ausreichende Verbindung zwischen den Teilstücken 100a und 100b ermöglicht. Die Profilierung 101 ist im Spitzenabschnitt der Borste 100 durch einen kreuzförmigen Querschnitt mit vier axial verlaufenden Rippen 103 gebildet.

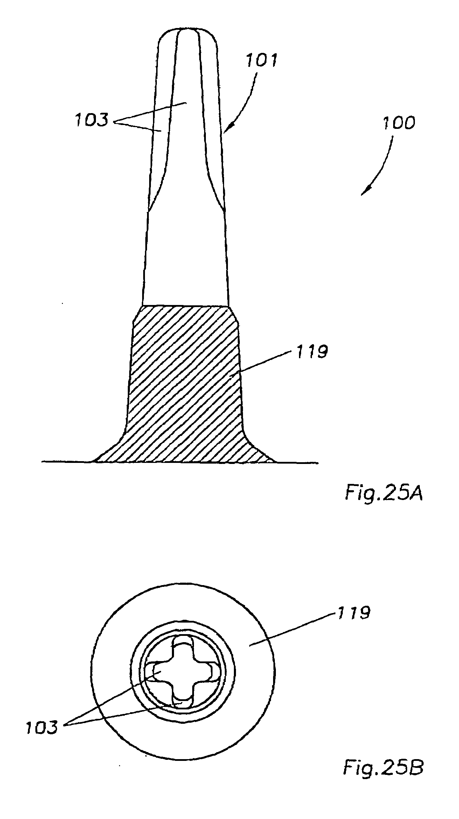

In den Fig. 25A und 25B ist eine Borste entsprechend Fig. 2A dargestellt, die zusätzlich im unteren Bereich des Schaftabschnittes, im Schaft-Basisabschnitt und im Wurzelbereich eine außenseitige Ummantelung 119 trägt, die der Aussteifung und Stabilisierung der Borste und/oder zur Visualisierung bestimmter Borsteneigenschaften dienen kann.

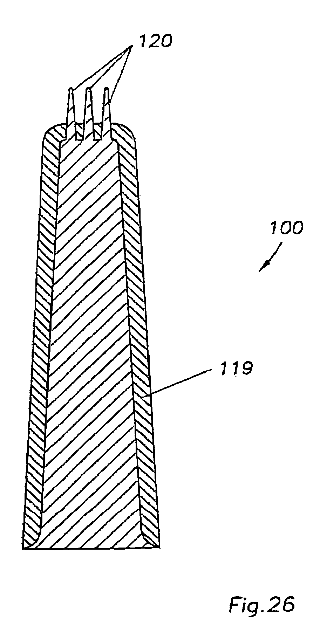

Gemäß Fig. 26 ist die gesamte Borste mit einer Ummantelung 119 versehen, wobei im Spitzenabschnitt mehrere axial nach oben hervorstehende Finger 120 vorgesehen sind, die die Ummantelung 119 durchdringen.

Im folgenden wird ein mögliches Herstellungsverfahren einer entsprechenden erfindungsgemäßen Borste im Detail erläutert, wobei in den Darstellungen aus Vereinfachungsgründen eine oberflächlich unprofilierte Borste dargestellt ist.

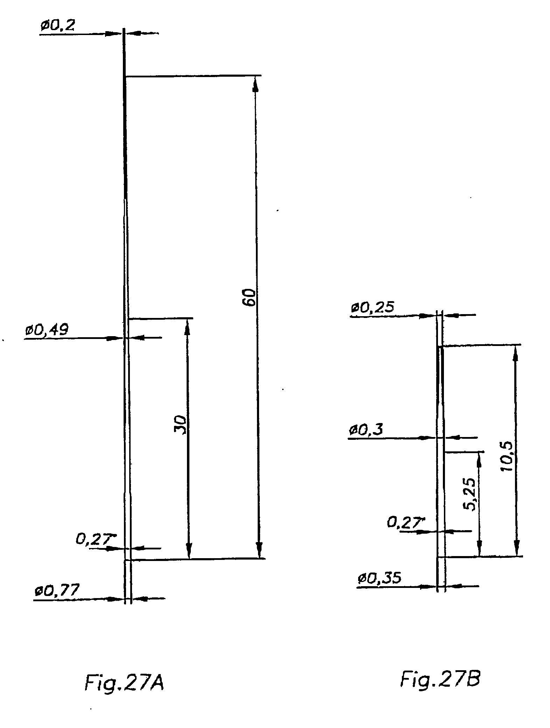

Mit den oben genannten Betriebsparametern für den Spritzdruck und der dadurch erzielbaren hohen Kerngeschwindigkeit mit großer Scherwirkung durch Wandreibung lassen sich durch Spritzgießen dünne Borsten mit variabler Länge herstellen, wie dies bisher nicht einmal durch Extrudieren von Endlosmonofilen möglich war, wobei sich eine schwache Konizität bei Borsten aus solchen Endlosmonofilen nur durch erheblichen verfahrenstechnischen Aufwand (Intervallabzug) verwirklichen lässt. In Fig. 27A und 27B sind zwei Ausführungsbeispiele gezeigt. Fig. 27A gibt im Maßstab 2:1 eine Borste mit einem Durchmesser von 0,77 mm im Wurzelbereich und 0,2 mm am Borstenende wieder, die auf der halben Länge einen mittleren Durchmesser von 0,49 mm aufweist. Bei einer äußerst schwachen Konizität mit einem Winkel von 0,27°, der der Formschräge des borstenformenden Kanals entspricht, lassen sich Borsten mit einer Länge von 60 mm oder mehr durch Spritzgießen herstellen, wie sie beispielsweise für hochwertige Pinsel oder dergleichen benötigt werden. Sie weisen einen mittleren Durchmesser auf halber Borstenlänge von ca. 0,5 mm auf. Fig. 27B zeigt im Maßstab 5:1 eine Borste mit einem Durchmesser 0,35 mm im Wurzelbereich und 0,25 mm am Borstenende bei einer Borstenlänge von 10,5 mm und gleichem Konuswinkel (Formschräge). Der mittlere Durchmesser beträgt 0,3 mm. Borsten dieser Art eignen sich beispielsweise für Zahnbürsten. Aufgrund der schlanken Geometrie solcher Borsten lassen sich diese sehr dicht anordnen, ohne dass - im Gegensatz zu herkömmlich spritzgegossenen Borsten - der Abstand im Bereich der Borstenenden zu groß wird.

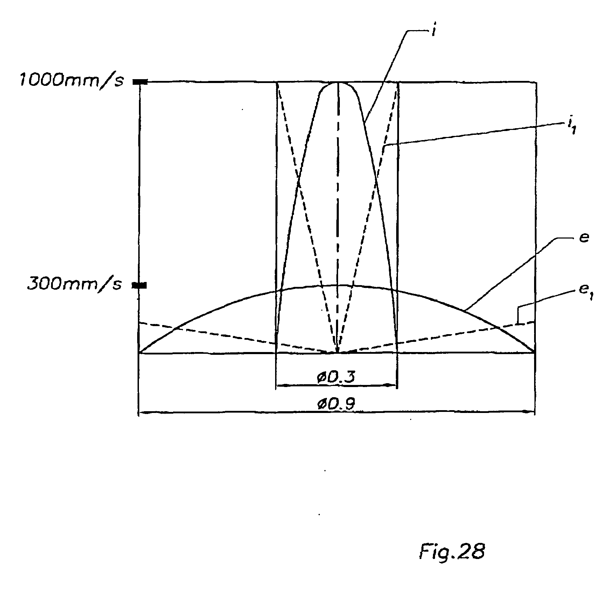

Die technische und gebrauchstechnische Überlegenheit der hergestellten Borste gegenüber einer im Extrusionsverfahren hergestellten Borste wird anhand der Fig. 28 deutlich.

Beim Extrusionsspinnen eines Monofils für die Herstellung einer Borste mit einem mittleren Durchmesser von 0,3 mm weist die Spinndüse einen Austrittsdurchmesser von 0,9 mm auf, wie in Fig. 28 durch die äußeren senkrechten Linien angedeutet. Die Polymerschmelze hat innerhalb der Düse eine maximale Fließgeschwindigkeit (Kerngeschwindigkeit) von typischerweise ca. 300 mm/s. Sie wird von dem Extruderdruck und der Abzugsgeschwindigkeit des Monofils bestimmt. Das die Düse verlassende Monofil wird auf einer kurzen Strecke mittels der Abzugskräfte auf einen Durchmesser verstreckt, der zwischen 0,9 und 0,3 mm liegt, und unmittelbar danach abgekühlt, um die Molekularstruktur zu fixieren. Beim anschließenden Nachverstrecken erhält das Monofil den endgültigen Durchmesser von 0,3 mm mit einer Durchmessertoleranz von ca. $\pm 10\%$. Das Geschwindigkeitsprofil ist in Fig. 28 mit <u>e</u> (extrusion) bezeichnet.

Beim Spritzgießen weist der borstenformende Kanal einen mittleren Durchmesser von 0,3 mm auf. Er ist in Fig. 28 mit den beiden inneren senkrechten Begrenzungslinien angedeutet. Bei einem Spritzdruck im Bereich von 2000 bar ($2 \cdot 10^5$ kPa) ergibt sich in dem Kanal eine Kerngeschwindigkeit von ca. 1000 mm/s. Das Geschwindigkeitsprofil ist mit <u>i</u> (injection) bezeichnet. Für die Eigenverstärkung des thermoplastischen Polymers ist die Scherwirkung in der Strömung, insbesondere im wandnahen Bereich maßgeblich, die durch die Scherrate (Schermoment) $\gamma$ bestimmt ist. Die Scherrate $\gamma$ über den Radius r des Fließkanals errechnet sich aus der Ableitung des Geschwindigkeitsprofils nach dem Radius r

$$\gamma(r) = \left| \frac{dv(r)}{dr} \right| = \frac{2 \, v_{max}}{R^2} \bullet r$$

Damit ist eine umgekehrte Proportionalität zum Quadrat des effektiven Durchmessers des Strömungskanals gegeben. Zur maximalen Fließgeschwindigkeit (Kerngeschwindigkeit) ist die Scherrate in der ersten Potenz proportional. Bei dem oben gezeigten Beispiel ergeben sich somit für die gespritzte Borste Scherraten, die die in der angegebenen Extrusionsströmung um wenigstens das 10-fache übersteigen.

Die Scherraten sind in Fig. 28 ohne Skalierung mit gestrichelten Linien für die Extrusion mit $e_1$ und für das Spritzgießen mit $i_1$ wiedergegeben. Sie weisen ihre Maxima jeweils an den Wänden der Düse bzw. des borstenformenden Kanals auf.

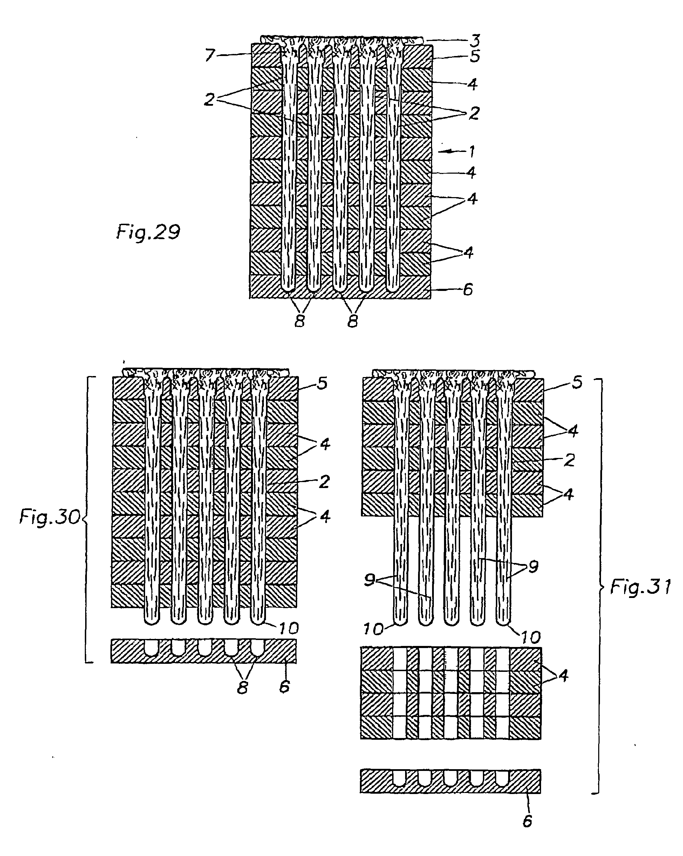

In den Fig. 29 bis 32 ist in schematischer Wiedergabe eine Ausführungsform einer Spritzgießform, wie sie zum Spritz-gießen von Borsten nach dem vorstehend beschriebenen Verfahren besonders geeignet ist, in verschiedenen Betriebsphasen wiedergegeben. Der Maßstab ist stark vergrößert, um Einzelheiten besser zu verdeutlichen.

Die Spritzgießform 1 weist mehrere parallele Formkanäle 2 großer Länge auf, die über einen Zuführkanal 3 an eine Spritzgießeinrichtung angeschlossen sind. Die Spritzgießeinrichtung ist so ausgelegt, dass Spritzdrücke im Bereich von 500 bar (0,5•10$^5$ kPa), vorzugsweise ≥ 2000 bar (2•10$^5$ kPa) erzeugt werden können. Die exakte Höhe des Spritzdrucks wird in Abhängigkeit von dem Querschnittsverlauf des Formkanals 2 über dessen Länge und in Abhängigkeit von der Länge selbst so eingestellt, dass in dem Formkanal ein spezifischer Druck > 300 bar (0,3•10$^5$ kPa) gegeben ist. Die Spritzgießform besteht aus einer Vielzahl geschichteter Formplatten 4, die im wesentlichen gleiche Dicke aufweisen, sowie aus einer anspritzseitigen Formplatte 5 und einer die Borstenenden formenden Formplatte 6. Die Formplatten 4, 5 und 6 weisen je einen Längenabschnitt des Formkanals 2 auf, die vorzugsweise durch Bohrungen erzeugt sind.

Die anspritzseitige Formplatte 5 weist Erweiterungen 7 auf, die sich zum Formkanal 2 hin verengen, um beispielsweise eine Dehnströmung zu erzeugen und den Wurzelbereich a der Borste zu formen. Die anschließenden Längenabschnitte des Formkanals in den Formplatten 4 weisen einen zylindrischen oder leicht konischen Querschnittsverlauf über ihre Länge auf, während die die Borstenenden bildende Formplatte 6 Sacklöcher 8, die beim gezeigten Ausführungsbeispiel kalottenförmig ausgebildet sind, aufweisen.

Beim Spritzgießen tritt die Polymerschmelze über den Zuführkanal 3 in die sich verengenden Erweiterungen 7 der Formplatte 5 ein und füllt aufgrund der hohen Kerngeschwindigkeit den gesamten Formkanal bis zu der die Enden formenden Platte 6. Im Zuführkanal 3 weist die Polymerschmelze noch eine weitgehend ungeordnete, knäuelartige Molekularstruktur auf, die in der anspritzseitigen Erweiterung 7 und dem anschließenden Formkanal 2 aufgrund der ausgeprägten Scherströmung in eine längsorientierte Molekularstruktur umgewandelt wird.

Die Formplatten 4, 5 und 6 sind senkrecht zur Plattenebene bewegbar, um die spritzgegossenen Borsten nach Erreichen einer ausreichenden Formstabilität zu entformen. Vorzugsweise ist das Spritzgießwerkzeug 1 so gekühlt, dass die Wandung der Formkanäle 2 relativ kalt bleibt, wodurch die Kristallbildung in der Polymerschmelze unterstützt wird.

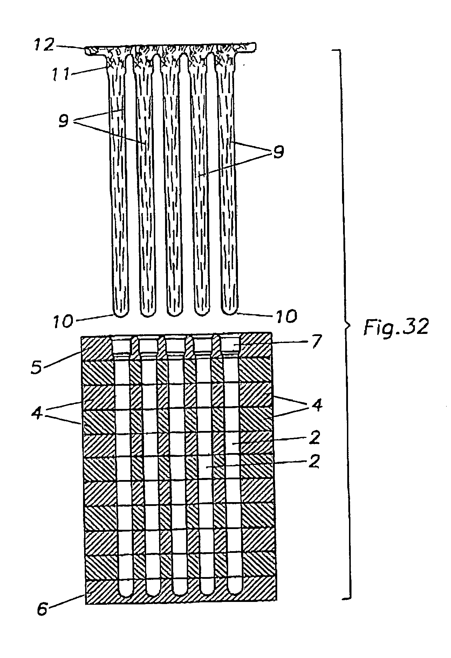

Zum Entformen der Borsten wird zunächst die Formplatte 6 abgerückt (Fig. 30). Dabei sind nur sehr geringe Haftkräfte zu überwinden, wodurch gewährleistet ist, dass die für den späteren Gebrauch einer Bürste oder eines Pinsels besonders wichtigen Borstenenden konturengleich erhalten bleiben. Danach werden die Formplatten 4 einzeln oder in Gruppen abgerückt (Fig. 31), bis die Borsten 9 mit ihren Enden 10 auf dem größten Teil ihrer Länge entformt sind. Während dieser Entformungsschritte werden die Borsten mittels der anspritzseitigen Formplatte 5 zurückgehalten und abschließend auch diese Formplatte 5 abgerückt, so dass sämtliche Borsten 9 mit ihrem etwas verdickten Wurzelbereich 11 freigestellt sind (Fig. 32). Die Polymerschmelze im anspritzseitigen Zuführkanal bildet zugleich eine Verbindung 12 für sämtliche Borsten 9 und kann der gesamte Spritzling entnommen und zu einer Bürste, einem Pinsel oder dergleichen komplettiert werden, wobei die Verbindung in den Aufbau integriert wird oder nur als Hilfsmittel zum Handhaben der Borsten dient und vor dem Verbinden der Borsten mit einem Bürstenkörper oder dergleichen abgetrennt wird.

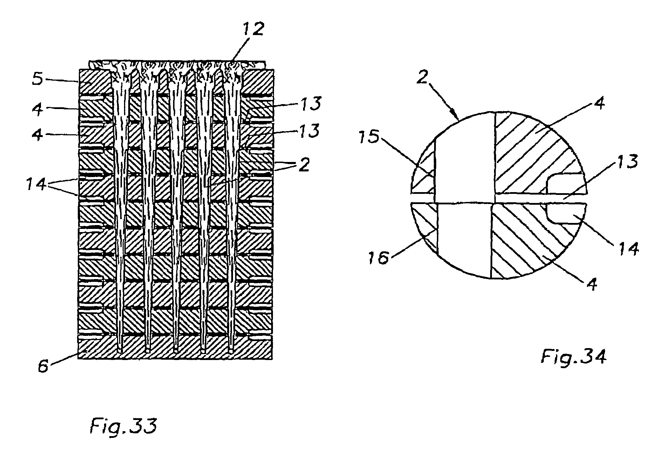

Während des Spritzgießens ist für eine die gewünschte hohe Kerngeschwindigkeit ermöglichende optimale Entlüftung der Formkanäle zu sorgen. Fig. 33 zeigt hierfür ein Ausführungsbeispiel. Die Entlüftung erfolgt über enge Spalte 13 zwischen den Formplatten 4, 5 und 6, so dass über die gesamte Länge der Formkanäle 2 die Luft entsprechend dem Fortschreiten der Schmelzefront abgeführt wird. Statt enger Spalte 13 können auch die einander zugekehrten Flächen der Formplatten 4, 5 und 6 aufgerauht werden, so dass sich in der Summe ausreichend große Entlüftungsquerschnitte ergeben. Um die abströmende Luft schnell entweichen zu lassen, weisen die Entlüftungsquerschnitte nach außen Erweiterungen 14 auf.

Die Formkanäle 2 können sich über ihre gesamte Länge mit einer Formschräge < 1,0° verjüngen, wobei die Verjüngung weniger eine Frage des Entformens, als eine Frage der gewünschten Borstenform und ihres Biegeverhaltens ist. Der Querschnittsverlauf der Formkanäle 2 kann aber auch von einer kontinuierlichen Konizität abweichen, wie dies im Zusammenhang mit der vorgesehenen Entlüftung in Fig. 34 in vergrößertem Maßstab gezeigt ist. In der in der Zeichnung oberen Formplatte 4 ist ein zylindrischer Längenabschnitt 15 und in der unten wiedergegebenen Formplatte 4 ein zylindrischer Längenabschnitt 16 des Formkanals 2 gezeigt. Zwischen den beiden Formplatten 4 verengt sich der Querschnitt vom Längenabschnitt 15 auf den Längenabschnitt 16 des Formkanals 2 um wenige μm, so dass eine an dieser Stelle eine schwache Stufe entsteht. An dieser Stelle erfolgt auch die Entlüftung über den Spalt 13 zwischen den beiden Formplatten, die in einer Erweiterung 14 auslaufen. Beim Entformen treten diese unmerklichen Stufen optisch nicht in Erscheinung, führen aber auf der gesamten Länge der Borste zu einer leichten Konizität. Die Längenabschnitte 15, 16 in den einzelnen Formplatten 4 lassen sich auf diese Weise durch einfaches Bohren erzeugen. Stattdessen können die Längenabschnitte in den einzelnen Formplatten auch gleiche Durchmesser aufweisen, so dass eine zylindrische Borste erhalten wird. Bei ausgeprägteren Durchmessersprüngen kann auch eine gestufte Borste erzeugt werden.

Eine konische Ausbildung der Borste hat spritzgießtechnisch bzw. entformungstechnisch den Vorteil, dass der kleinste Querschnitt am Borstenende schneller abkühlt als die anschließenden Bereiche der Borste bis zum Wurzelbereich. Die schrittweise Entformung vom Borstenende zur Borstenwurzel folgt also dem Temperaturgradienten in der Borste.

Die Dicke der Formplatten 4 beträgt einige Millimeter. Sie kann etwa dem Drei- bis Fünfzehnfachen des Durchmessers des Formkanals 2 entsprechen, so dass ein außerordentlich präzises Verbohren der Längenabschnitte in den einzelnen Formplatten möglich ist. Da sie unter dem Schließdruck der Spritzgießmaschine in Anlage aneinander gehalten werden, bleiben selbst diese dünnen Formplatten trotz des hohen Spritzdrucks maß- und formhaltig. Aufgrund der geringen Dicke ist auch eine gute Wärmeableitung gewährleistet, da die Formplatten untereinander durch die Entlüftungsspalte gleichsam isoliert sind. Sie lassen sich aus dem gleichen Grund auch problemlos kühlen, beispielsweise durch externe Kühlmittel, die bei geschlossener Form insbesondere aber auch in der Zeit zwischen dem Öffnen und erneuten Schließen besonders wirksam werden können. Aufgrund er Freistellung der Formplatten und ihrer geringen Dicke findet ein wirksames Kühlen schon allen durch die Umgebungsluft statt.

Stattdessen können die Kühlmittel aber auch in die Formplatten oder zwischen diesen integriert sein. Schließlich gibt die geringe Beanspruchung unter dem Spritzdruck die Möglichkeit, die Formplatten aus gut wärmeleitfähigen Werkstoffen mit geringeren Festigkeitswerten als Stahl oder dergleichen auszubilden.

Die Wirkungen einer effektiven Kühlung auf die Molekularstruktur der Borsten ist bereits erläutert worden.

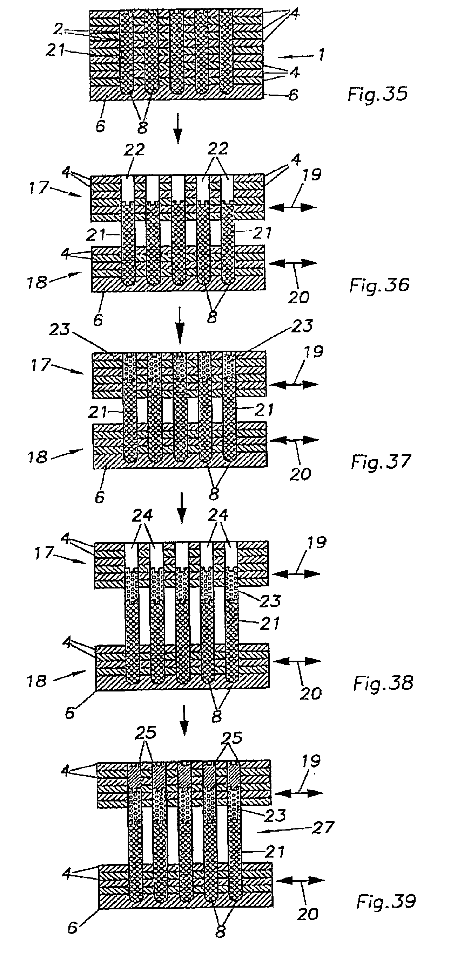

Fig. 35 zeigt wiederum eine Spritzgießform 1 in schematischer Darstellung, die aus geschichteten Formplatten 4 besteht, wobei die anspritzseitige Formplatte keine erweiterten Querschnitte aufweist. Abweichend von den zuvor beschriebenen Ausführungsformen sind die Formplatten 4 in zwei Gruppen 17, 18 unterteilt (siehe Fig. 36), wobei jede Gruppe wenigstens eine quer verschiebbare Formplatte aufweist, wie dies in Fig. 36 bis 39 mit den Doppelpfeilen 19, 20 angedeutet ist.

Diese quer verschiebbaren Formplatten wirken zusammen mit den benachbarten Formplatten als eine Art Klemmeinrichtung für die Spritzlinge 21, die bei diesem Ausführungsbeispiel nur einen Bereich (Längenabschnitt) der endgültigen Borste bilden. Der Spritzling 21 wird aus einem thermoplastischen Polymer mit einem auf diesen Längenabschnitt der fertigen Borste abgestimmten Eigenschaftsprofil gespritzt. Nach dem Spritztakt wird wenigstens eine verschiebbare Platte in der Gruppe 18 der Formplatten 4 (Fig. 36) in Klemmlage gebracht und werden die Spritzlinge 21 bei Abrücken der Gruppe 18 mitgenommen und dabei aus den Formplatten 4 der anspritzseitigen Gruppe 17 teilweise entformt, so dass in den Formplatten 4 der Gruppe 17 ein vorgegebener Längenabschnitt 22 der Formkanäle freigestellt wird. Am Ende des Spritzlings 21 können gegebenenfalls Profilierungen angeformt sein, wie sie in der Zeichnung angedeutet sind. Nach dem Abrücken der Formplatten 4 der Gruppe 18 wird die verschiebbare Formplatte in der Gruppe 17 in Klemmposition gebracht und werden daraufhin die freigestellten Längenabschnitte 22 mit einer Polymerschmelze gefüllt, die aus einem anderen Polymer oder einem Polymer mit anderen Additiven besteht. Die sich dabei bildenden Längenabschnitte 23 der Borste verbinden sich mit den Spritzlingen 21 durch Stoff- und/oder Formschluß. Anschließend wird die verschiebbare Formplatte in der Gruppe 17 in ihre Ausgangslage zurückgeführt und werden die Spritzlinge 21 mit den angeformten Längenabschnitten 23 bei geschlossener Klemmeinrichtung in der Gruppe 18 wiederum aus den Formkanälen der Gruppe 17 teilweise herausgezogen, so dass in den Formkanälen Längenabschnitte 24 freigestellt werden. In einem weiteren Spritzgießtakt werden die Längenabschnitte 24 mit einer weiteren Polymerschmelze mit gegebenenfalls nochmals differenzierten Eigenschaften gefüllt, so dass schließlich Mehrbereichsborsten 27 erhalten werden, die aus drei Bereichen (Abschnitte 21, 23 und 25) bestehen, die über die Länge der Borsten unterschiedliche Festigkeitswerte und/oder unterschiedliche Gebrauchseigenschaften aufweisen. Dabei kann insbesondere der das Borstenende einschließende Bereich 21 auch als Verbrauchsanzeige für den Abnutzungsgrad der Borste dienen. Das endgültige Entformen der Borsten erfolgt in der zuvor beschriebenen Weise.

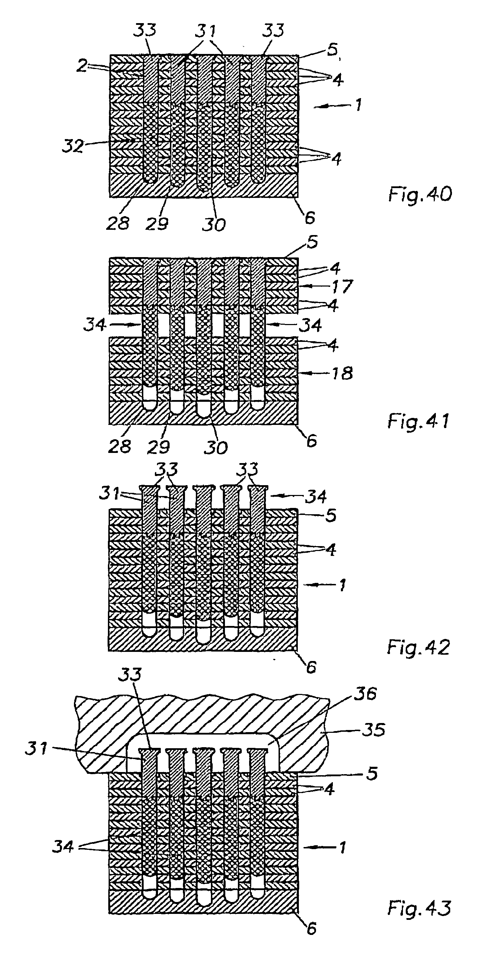

In den Fig. 40 bis 43 ist wiederum eine Spritzgießform 1 (Fig. 21) gezeigt, die aus zwei Gruppen 17, 18 von Formplatten 4 besteht, die jeweils mindestens eine quer verschiebbare Formplatte zur Bildung einer Klemmeinrichtung aufweisen. Im Gegensatz zur zuvor beschriebenen Ausführung weist die anspritzseitige Formplatte 5 wiederum Erweiterungen auf, die sich zum Formkanal hin verjüngen. Die die Borstenenden abformende Formplatte 6 weist unterschiedlich tiefe Sacklöcher 28, 29 und 30 mit kalottenförmigem Lochgrund auf, so dass eine Mehrzahl von Borsten unterschiedlicher Länge hergestellt werden kann, deren Enden auf einer gekrümmten Hüllfläche liegen.

Bei dem Ausführungsbeispiel gemäß Fig. 40 bis 43 werden Borsten mit zwei unterschiedlichen Bereichen 31, 32 nacheinander gespritzt, wobei der Bereich 31 eine erweiterte Borstenwurzel 33 aufweist. Die auf diese Weise gespritzten Mehrbereichsborsten 34 (Fig. 41) werden anschließend an ihren Enden entformt, indem die die Borstenenden bildende Formplatte 6 und - gegebenenfalls zeitverzögert - die Formplatten 4 der Gruppe 18 abgerückt werden (Fig. 41). Danach wird wenigstens eine quer verschiebbare Formplatte in der Gruppe 18 in Klemmlage gebracht und die gesamte Gruppe 18, gegebenenfalls zusammen mit der endständigen Formplatte 6, in entgegengesetzter Richtung verfahren, so dass die Borsten 34 mit einem Teil ihres Bereichs 31 mit dem Wurzelbereich 33 die anspritzseitige Formplatte 5 überragen. Anschließend wird die Spritzgießform 1 (Fig. 42) mit einer weiteren Spritzgießform 35 mit einer Formkavität 36 in Verbindung gebracht, in die eine Polymerschmelze gespritzt wird, mit der die Wurzelbereiche 23 und die in die Kavität 36 hineinragenden Längenabschnitte der Bereiche 31 umspritzt werden. Die Formkavität 36 kann so ausgebildet sein, dass sie einen Zwischenträger für die Borsten oder einen vollständigen Bürstenkörper bildet, in den die Borstenenden auszugsfest und spaltlos eingebettet sind.

In Abwandlung dieser Ausführungsform können die Formkanäle 2 der Spritzgießform 1 gemäß Fig. 40 auch vollständig mit einer einzigen Polymerschmelze gefüllt werden und können deren Wurzelbereiche mit dem anschließenden Längenabschnitt in der in Fig. 41 und 42 gezeigten Weise freigestellt werden, um gemäß Fig. 43 mit einer trägerformenden Polymerschmelze umspritzt zu werden.

In weiterer Abwandlung können die gemäß Fig. 40 bis 42 gespritzten und an ihren befestigungsseitigen Enden freigestellten Borsten durch Abrücken der die Enden abbildenden Formplatte 6 und der überwiegenden Anzahl der folgenden Formplatten 4 vollständig entformt werden, während sie von einigen wenigen, nämlich minimal drei Formplatten, z.B. der anspritzseitigen Formplatte 5 und den beiden folgenden Formplatten, von denen eine quer verschiebbar zur Bildung einer Klemmeinrichtung ist, gehalten werden. Diese als Transporthalterung dienenden Formplatten können dann zusammen mit den Borsten in eine andere Spritzgießstation verbracht werden, in der sie mit der Spritzgießform 35 in Verbindung gebracht werden, während gleichzeitig ein neuer Satz von Formplatten mit anspritzseitiger Formplatte 5 herangebracht wird, um die Spritzgießform 1 zu vervollständigen. Diese Transporthalterung kann nicht nur zum Verbringen der Borsten in die zweite Spritzgießstation, sondern auch zum Weitertransport in andere Bearbeitungsstationen dienen.

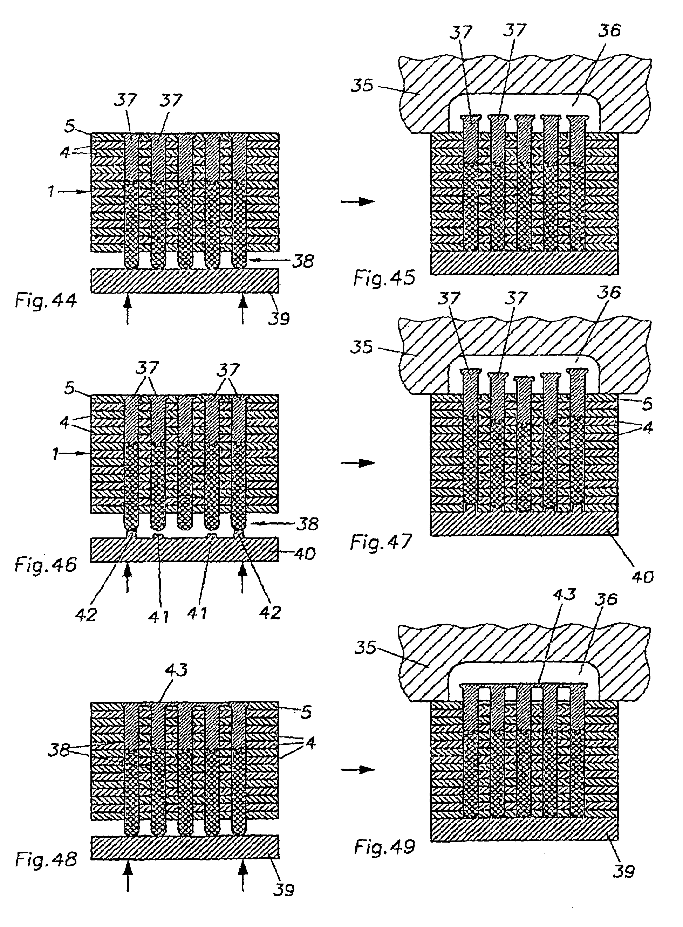

Fig. 44 und 45 zeigen einen Teil einer Spritzgießform 1 mit Formplatten 4 und 5 nach dem Herstellen der Borsten und Abrücken wenigstens der (nicht gezeigten) endständigen Formplatte 6. Statt dieser wird vor die freigestellten Enden der Borsten 38 eine ebene Schubplatte 39 eingefahren, mittels der die Borsten 38 in den Formkanälen der verbleibenden Formplatten verschoben werden, bis sie mit ihrem Wurzelbereich 37 und gegebenenfalls einem daran anschließenden Längenabschnitt die anspritzseitige Formplatte 5 überragen bzw. in die Formkavität 36 der weiteren Spritzgießform 35 hineinragen und mit einer einen Borstenträger oder einen Bürstenkörper bildenden Polymerschmelze umspritzt werden.

Fig. 46 und 47 zeigt ein Ausführungsbeispiel, bei dem nach Herstellung der Borsten 38 in der mit Bezug auf Fig. 44 und 45 beschriebenen Weise statt der ebenen Schubplatte 39 eine Schubplatte 40 vor die freigestellten Borstenenden eingefahren wird, die mit unterschiedlich hohen nockenartigen Vorsprüngen 41 und 42 versehen ist. Nach Heranfahren der Schubplatte 40 an die Formplatten 4 werden die Borsten auf den Schubweg unterschiedlich tief in den Formkanälen verschoben, so dass sie mit ihrem Wurzelbereich 37 unterschiedlich weit in die Formkavität 36 der Spritzgießform 35 hineinragen und nach Umspritzen und Abrücken der Schubplatte 40 sowie der Formplatten 4 und 5 die Borstenenden auf einer gekrümmten Hüllfläche liegen.

Fig. 48 und 49 zeigt ein Ausführungsbeispiel, das sich von dem der Fig. 44 und 45 nur dadurch unterscheidet, dass die Borsten 38 im Bereich der anspritzseitigen Formplätte 5 über eine Verbindung 43 in Form von Stegen, Gittern oder dergleichen miteinander verbunden sind und nach dem Verschieben mittels der Schubplatte 39 mit der Verbindung 43 und den anschließenden Längenabschnitten der Borsten 38 in die Kavität 36 der Spritzgießform 35 hineinragen.

Eine kleinere Gruppe von Formplatten 4, vorzugsweise unter Einschluss der einspritzseitigen Formplatte 5, und mit wenigstens einer als Klemmeinrichtung wirkenden, quer verschiebbaren Formplatte 4 kann auch als Transporthalterung für das Umsetzen der Borsten in weitere Spritzgießstationen, Bearbeitungsstationen oder dergleichen dienen.

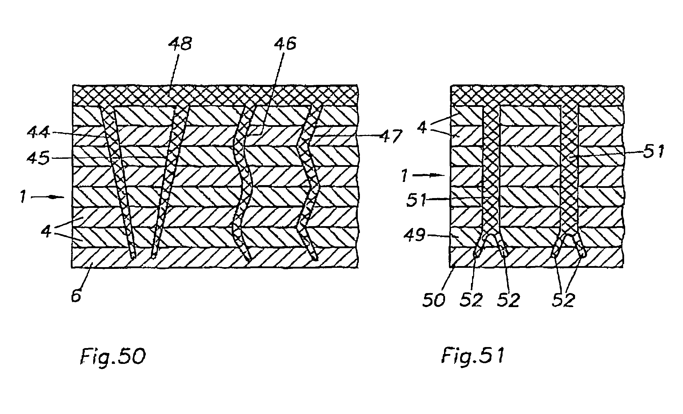

Der schichtweise Aufbau der Spritzgießform aus einer Vielzahl von Formplatten und das dadurch mögliche abschnittsweise Entformen sowie die durch die Verfahrensparameter des Spritzdrucks und der Strömungsgeschwindigkeit im Formkanal erzielte Steigerung des Elastizitätsmoduls und der Zugfestigkeit erlauben auch die Herstellung von Borsten, deren Mittelachse nicht in der Entformungsrichtung liegt. Beispiele hierfür sind in den Fig. 50 und 51 gezeigt. Fig. 50 zeigt einen Teil einer Spritzgießform mit geneigten Formkanälen 44, 45, die bei dem Ausführungsbeispiel gegeneinander geneigt sind. Zusätzlich oder stattdessen kann die Spritzgießform 1 wellenförmig gekrümmte Formkanäle 46 oder mehrfach abgewinkelte Formkanäle 47 aufweisen, so dass entsprechend geformte Borsten erhalten werden, die über eine Verbindung 48 im Verbund gespritzt werden können. Beim Entformen werden die Formplatten 4 und 6, beginnend mit letzterer abgerückt und die Borsten abschnittsweise entformt, wobei sie aufgrund ihrer hohen Biegeelastizität und der geringen Entformungslänge keine Deformationen erleiden.

Die Borsten können nach Abtrennen der Verbindung einzeln oder in Gruppen oder aber zusammen mit der Verbindung 48 durch Umspritzen derselben oder durch andere thermische oder mechanische Verbindungsverfahren bekannter Art zu einer Bürste konfektioniert werden.

Bei dem Ausführungsbeispiel gemäß Fig. 51 weist die Spritzgießform 1 wiederum geschichtete Formplatten 4 und zwei endständige Formplatten 49, 50 auf, die zur Ausbildung stärker gegliederter Borstenenden dienen. Die spritzgegossenen Borsten 51 weisen jeweils fingerartige Borstenenden 52 auf, die sich aufgrund der dünnen Formplatten und der erhöhten Stabilität der Borsten problemlos entformen lassen.

Die die Borstenenden ausbildenden Formplatten 6 oder 49, 50 können insbesondere bei stärker gegliederten Borstenenden gegebenenfalls aus einem Sintermetall bestehen, das auch in diesem Bereich für eine zusätzliche Entlüftung sorgt, um Lufteinschlüsse wirksam zu vermeiden. Selbstverständlich können auch die Formplatten 4 aus solchen Sintermetallen bestehen, um die Entlüftung der Formkanäle zu unterstützen. Mikrorauhigkeiten, wie sie beispielsweise bei Sintermetallen vorhanden sind oder auch durch Oberflächenbehandlung der Formkanäle erzeugt werden können, führen an der Oberfläche der fertigen Borste zu entsprechenden Rauhigkeiten im Mikrobereich, die bei Gebrauch der Borste zu einem feuchtigkeitsabweisenden "Lotus"-Effekt führen.

**Patentansprüche**

1. Borste für eine Borstenware, insbesondere eine Reinigungsbürste, eine Zahnbürste oder eine Applikationsbürste, wobei die Borste (100) einen unteren Wurzelbereich (a), mit dem sie in oder an einem Borstenträger anbringbar oder Teil eines Borstenträgers ist, und eine außerhalb des Borstenträgers liegende, oberhalb des Wurzelbereichs (a) angeordnete, freie Länge (1) besitzt, die sich aus einem an den Wurzelbereich (a) angrenzenden Schaftbereich (S) und einem darüber angeordneten Flex-Bereich (F) zusammensetzt, wobei der Schaftbereich (S) sich zusammensetzt aus einem unteren, an den Wurzelbereich (a) angrenzenden Schaft-Basisabschnitt (b) und einem darüberliegenden Schaftabschnitt (c) und wobei der Flex-Bereich (F) sich zusammensetzt aus einem unteren, an den Schaftbereich (S) angrenzenden Wirk- und Flexabschnitt (d) und einem darüberliegenden, das freie Ende der Borste bildenden Spitzenabschnitt (t), wobei die Borste in dem Schaft-Basisabschnitt (b) eine kontinuierliche, vertiefungsfreie Mantelfläche und auch im Schaftabschnitt (c) eine kontinuierliche, vertiefungsfreie Mantelfläche besitzt und in dem Flex-Bereich (F) zumindest abschnittsweise auf der Mantelfläche eine von Erhebungen und/oder Vertiefungen gebildete, innerhalb einer Hüllfläche der Borste liegende Profilierung (101; 105; 108; 115; 118) trägt, wobei die Profilierung (108) zumindest eine um die Borste umlaufende Nut (109) umfasst, **dadurch gekennzeichnet, dass** der Schaftbereich (S) 15 % bis 85 % der freien Länge (1) umfasst.

2. Borste nach Anspruch 1, **dadurch gekennzeichnet, dass** der Schaftbereich (S) 35 % bis 65 % der freien Länge (1) umfasst

3. Borste nach Anspruch 1 oder 2, **dadurch gekennzeichnet, dass** die Profilierung (101;105;108,115;118) im oberen Bereich des Wirk- und Flexabschnittes (d) und/oder im Spitzenabschnitt (t) ausgebildet ist.

4. Borste nach einem der Ansprüche 1 bis 3 **dadurch gekennzeichnet, dass** nur der Spitzenabschnitt (t) mit einer Profilierung (101; 115) versehen ist.

5. Borste nach einem der Ansprüche 1 bis 4, **dadurch gekennzeichnet, dass** der Querschnitt der Borste in dem Schaft-Basisabschnitt (b) und/oder dem Schaftabschnitt (c) und/oder dem Wirk- und Flexabschnitt (c) kreisförmig, oval oder polygonförmig mit abgerundeten Ecken ausgebildet ist.

6. Borste nach einem der Ansprüche 1 bis 5, **dadurch gekennzeichnet, dass** die Hüllfläche der Borste auf ihrer freien Länge (1) zumindest abschnittsweise von der Mantelfläche eines geraden Zylinders gebildet ist.

7. Borste nach einem der Ansprüche 1 bis 6, **dadurch gekennzeichnet, dass** die Hüllfläche der Borste auf ihrer freien Länge (1) zumindest abschnittsweise von der Mantelfläche eines Kegels oder eines Kegelstumpfs gebildet ist.

8. Borste nach Anspruch 7, **dadurch gekennzeichnet, dass** der Konizitätswinkel kleiner als 50 und insbesondere kleiner als 10 ist.

9. Borste nach einem der Ansprüche 1 bis 8, **dadurch gekennzeichnet, dass** die geometrische Querschnittsform der Borste sich im Spitzenbereich (t) ändert.

10. Borste nach einem der Ansprüche 1 bis 9, **dadurch gekennzeichnet, dass** die Übergänge zwischen den Profilierungen und/oder zwischen der Profilierung und der vertiefungsfreien Mantelfläche stufenlos verlaufen.

11. Borste nach einem der Ansprüche 1 bis 10, **dadurch gekennzeichnet, dass** zwischen zwei axial beabstandeten Profilierungen (101;101,105;101,108) ein Abschnitt (104) mit vertiefungsfreier Mantelfläche angeordnet ist.

12. Borste nach einem der Ansprüche 1 bis 11, **dadurch gekennzeichnet, dass** mehrere Nuten (109) übereinander angeordnet sind.

13. Borste nach einem der Ansprüche 1 bis 12, **dadurch gekennzeichnet, dass** die Profilierung (105) mehrere in Umfangsrichtung der Borste nebeneinanderliegende Längsnuten (106) umfasst.

14. Borste nach einem der Ansprüche 1 bis 13, **dadurch gekennzeichnet, dass** zwischen benachbarten Nuten (106; 109) eine spitzwinklige Kante (107;110) gebildet ist.

**15.** Borste nach einem der Ansprüche 1 bis 14, **dadurch gekennzeichnet, dass** die Borste im Bereich oder Profilierung einen kreuz- oder sternförmigen Querschnitt mit mehreren in Längsrichtung der Borste verlaufenden Rippen (103) besitzt, die über den Borstenumfang verteilt angeordnet sind.

**16.** Borste nach einem der Ansprüche 1 bis 15, **dadurch gekennzeichnet, dass** die Borste im Bereich der Profilierung einen polygonförmigen, insbesondere dreieckigen oder viereckigen Querschnitt besitzt.

**17.** Borste nach einem der Ansprüche 1 bis 16, **dadurch gekennzeichnet, dass** zwei unterschiedliche Profilierungen bereichsweise überlagert sind.

**18.** Borste nach einem der Ansprüche 1 bis 17, **dadurch gekennzeichnet, dass** der Spitzenabschnitt (t) von sich axial erstreckenden Fingern (114; 120) gebildet ist.

**19.** Borste nach einem der Ansprüche 1 bis 9, **dadurch gekennzeichnet, dass** die Borste aus axial aufeinanderfolgenden Teilstücken (100a, 100b,100c) aus unterschiedlichen Materialien besteht.

**20.** Borste nach Anspruch 19, **dadurch gekennzeichnet, dass** zumindest eines der Teilstücke (100a, 100b,100c) eingefärbt ist.

**21.** Borste nach Anspruch 19 oder 20, **dadurch gekennzeichnet, dass** zumindest eines der Teilstücke (100a, 100b, 100c) als Verbraüchsindikator ausgestaltet ist.

**22.** Borste nach einem der Ansprüche 1 bis 21, **dadurch gekennzeichnet, dass** die Borste zumindest abschnittsweise mit einer Beschichtung (116) versehen ist.

**23.** Borste nach Anspruch 22, **dadurch gekennzeichnet, dass** die Profilierung zumindest teilweise mit der Beschichtung (116) versehen ist.

**24.** Borste nach Anspruch 22 oder 23, **dadurch gekennzeichnet, dass** die Beschichtung (116) als Verbrauchsindikator ausgestaltet ist.

**25.** Borste nach einem der Ansprüche 1 bis 24, **dadurch gekennzeichnet, dass** die Borste ausgehend vom Wurzelbereich einen inneren axialen Hohlkanal (117) besitzt.

**26.** Borste nach Anspruch 25, **dadurch gekennzeichnet, dass** der Hohlkanal (117) sich durch die gesamte Borste bis kurz unterhalb des freien Endes erstreckt.

**27.** Borste nach Anspruch 25, **dadurch gekennzeichnet, dass** der Hohlkanal (117) sich durch die gesamte Borste erstreckt und im Spitzenabschnitt (t) mündet.

**28.** Borste nach einem der Ansprüche 1 bis 27, **dadurch gekennzeichnet, das** die Profilierung zumindest ein axiales Profilelement (118) umfasst, das den Spitzenabschnitt (t) bildet.

**29.** Borste nach einem der Ansprüche 1 bis 28, **dadurch gekennzeichnet, dass** der Übergang zwischen der Profilierung und der unprofilierten Mantelfläche in einer Ebene (E) erfolgt, die im wesentlichen senkrecht zur Längsachse der Borste verläuft.

**30.** Borste nach einem der Ansprüche 1 bis 28, **dadurch gekennzeichnet, dass** der Übergang zwischen der Profilierung und der unprofilierten Mantelfläche in einer Ebene (E) erfolgt, die schräg zur Längsachse der Borste verläuft.

**31.** Borste nach einem der Ansprüche 1 bis 30, **dadurch gekennzeichnet, dass** der Wurzelbereich (a) und der Schaft-Basisabschnitt (b) mit einer Ummantelung (119) versehen sind.

**32.** Borste nach einem der Ansprüche 1 bis 31, **dadurch gekennzeichnet, dass** die gesamte Borste mit einer Ummantelung versehen ist.

**33.** Borste nach Anspruch 31 oder 32, **dadurch gekennzeichnet, dass** die Ummantelung Teil des Borstenträgers ist.

34. Borste nach einem der Ansprüche 1 bis 33, **dadurch gekennzeichnet, dass** der Schaft-Basisabschnitt (b) eine axiale Länge von ≤ 10 mm und insbesondere von ≤ 1 mm besitzt.

35. Borste nach einem der Ansprüche 1 bis 34, **dadurch gekennzeichnet, dass** sie im Gussverfahren oder im Spritzgussverfahren hergestellt ist.

36. Borstenware, insbesondere Reinigungsbürste, Zahnbürste oder Applikationsbürste, mit Borsten gemäß einem der Ansprüche 1 bis 35.

**Claims**

1. Bristle for a brush ware, in particular a cleaning brush, toothbrush or application brush, wherein the bristle (100) has a lower root region (a) which can be mounted in or to a bristle support or which forms part of a bristle support, and a free length (1) which lies outside of the bristle support and is disposed above the root region (a), the free length (1) being composed of a shaft region (S) which borders the root region (a) and a flexing region (F) disposed thereabove, wherein the shaft region (S) is composed of a lower shaft base section (b) which borders the root region (a), and a shaft section (c) disposed thereabove, and wherein the flexing region (F) is composed of a lower active and flexing section (d) bordering the shaft region (S), and a tip section (t) disposed thereabove which forms the free end of the bristle, wherein the bristle has a continuous depression-free jacket in the shaft base section (b) and a continuous depression-free jacket in the shaft section (c) as well, and at least sections of the jacket in the flexing region (F) have a profiling (101; 105; 108, 115; 118) which is formed by elevations and/or depressions and which is disposed within an outer surface of the bristle, wherein the profiling (108) comprises at least one groove (109), which extends about the bristle, **characterized in that** the shaft region (S) comprises 15 % to 85 % of the free length (1).

2. Bristle according to claim 1, **characterized in that** the shaft region (S) comprises 35 % to 65 % of the free length (1).

3. Bristle according to claim 1 or 2, **characterized in that** the profiling (101; 105; 108, 115; 118)is formed in the upper region of the active and flexing section (d) and/or in the tip section (t).

4. Bristle according to any one of the claims 1 through 3, **characterized in that** only the tip section (t) is provided with a profiling (101; 115).

5. Bristle according to any one of the claims 1 through 4, **characterized in that** the cross-section of the bristle in the shaft base section (b) and/or in the shaft section (c) and/or the active and flexing section (c) is circular, oval or polygonal with rounded corners.

6. Bristle according to any one of the claims 1 through 5, **characterized in that** at least sections of the free length (1) of the outer surface of the bristle have a straight cylindrical jacket.

7. Bristle according to any one of the claims 1 through 6, **characterized in that** at least sections of the free length (1) of the outer surface of the bristle have a conical or a truncated conical jacket.

8. Bristle according to claim 7, **characterized in that** the conicity angle is smaller than 50 and in particular smaller than 10.

9. Bristle according to any one of the claims 1 through 8, **characterized in that** the geometrical cross-sectional shape of the bristle changes in the tip region (t).

10. Bristle according to any one of the claims 1 through 9, **characterized in that** the transitions between the profilings and/or between the profiling and the depression-free jacket are smooth.

11. Bristle according to any one of the claims 1 through 10, **characterized in that** a section (104) with depression-free jacket is disposed between two axially separated profilings (101; 101, 105; 101, 108).

12. Bristle according to any one of the claims 1 to 11, **characterized in that** several grooves (109) are disposed one on top of the other.

13. Bristle according to any one of the claims 1 through 12, **characterized in that** the profiling (105) comprises several longitudinal grooves (106) disposed next to each other about the circumferential direction of the bristle.

14. Bristle according to any one of the claims 1 through 13, **characterized in that** a sharp edge (107; 110) is formed between neighboring grooves (106; 109).

15. Bristle according to any one of the claims 1 through 14, **characterized in that** the bristle has a crossed or star-shaped cross-section in the region of the profiling with several ribs (103) extending in the longitudinal direction of the bristle which are distributed about the bristle periphery.

16. Bristle according to any one of the claims 1 through 15, **characterized in that** the bristle has a polygonal, in particular triangular or four-sided cross-section in the region of the profiling.

17. Bristle according to any one of the claims 1 through 16, **characterized by** regions in which two different profilings overlap one another.

18. Bristle according to any one of the claims 1 through 17, **characterized in that** the tip section (t) is formed by axially extending fmgers (114; 120).

19. Bristle according to any one of the claims 1 through 9, **characterized in that** the bristle consists of axially sequential parts (100a, 100b, 100c) of different materials.

20. Bristle according to claim 19, **characterized in that** at least one of the parts (100a, 100b, 100c) is colored.

21. Bristle according to claim 19 or 20, **characterized in that** at least one of the parts (100a, 100b, 100c) is designed as a wear indicator.

22. Bristle according to any one of the claims 1 through 21, **characterized in that** at least portions of the bristle are provided with a coating (116).

23. Bristle according to claim 22, **characterized in that** at least portions of the profiling are provided with the coating (116).

24. Bristle according to claim 22 or 23, **characterized in that** the coating (116) is designed as a wear indicator.

25. Bristle according to any one of the claims 1 through 24, **characterized in that** the bristle has an inner hollow axial channel (117), starting from the root region.

26. Bristle according to claim 25, **characterized in that** the hollow channel (117) extends through the entire bristle to just below the free end.

27. Bristle according to claim 25, **characterized in that** the hollow channel (117) extends through the entire bristle and opens into the tip section (t).

28. Bristle according to any one of the claims 1 through 27, **characterized in that** the profiling has at least one axial profiled element (118), which forms the tip section (t).

29. Bristle according to any one of the claims 1 through 28, **characterized in that** the transition between the profiling and the unprofiled jacket is in a plane (E), which extends substantially perpendicular to the longitudinal axis of the bristle.

30. Bristle according to any one of the claims 1 through 28, **characterized in that** the transition between the profiling and the unprofiled jacket is in a plane (E), which extends at an angle with respect to the longitudinal axis of the bristle.

31. Bristle according to any one of the claims 1 through 30, **characterized in that** the root region (a) and the shaft base section (b) are provided with a cover (119).

32. Bristle according to any one of the claims 1 through 31, **characterized in that** the entire bristle is provided with a cover.

**33.** Bristle according to claim 31 or 32, **characterized in that** the cover is part of the bristle support.

**34.** Bristle according to any one of the claims 1 through 33, **characterized in that** the shaft base section (b) has an axial length of ≤ 10 mm and in particular ≤ 1 mm.

**35.** Bristle according to any one of the claims 1 through 34, **characterized in that** it is produced through casting or injection molding.

**36.** Brush ware, in particular cleaning brush, toothbrush or application brush having bristles in accordance with any one of the claims 1 through 35.

**Revendications**

**1.** Soie pour un produit de brossage, en particulier une brosse de nettoyage, une brosse à dent ou une brosse d'application, dans laquelle
la soie (100) possède une zone de racine (a) inférieure, avec laquelle elle peut être montée dans ou sur un porte-soie ou fait partie d'un porte-soie, et une longueur (1) libre, disposée au-dessus de la zone de racine (a), se trouvant en dehors du porte-soie, qui se compose d'une zone de tige (S) jouxtant la zone de racine (a) et d'une zone flexible (F) disposée au-dessus,
la zone de tige (S) se compose d'une partie de base de tige (b) inférieure, jouxtant la zone de racine (a) et d'une partie de tige (c) se trouvant au-dessus et
la zone flexible (F) se compose d'une partie flexible et active (d) inférieure, jouxtant la zone de tige (S) et d'une partie de pointe (t) se trouvant au-dessus, formant l'extrémité libre de la soie,
la soie dans la partie de base de tige (b) possède une surface périphérique continue, sans cavité et également dans la partie de tige (c) une surface périphérique continue, sans cavité et porte dans la zone flexible (F) au moins par endroits sur la surface périphérique un profilage (101 ; 105 ; 108 ; 115 ; 118) formé par des surélévations et/ou des cavités, se trouvant à l'intérieur d'une surface d'enveloppe de la soie,
le profilage (108) comprend au moins une rainure (109) entourant la soie,
**caractérisée en ce que** la zone de tige (S) comprend 15 à 85 % de la longueur (1) libre.

**2.** Soie selon la revendication 1, **caractérisée en ce que** la zone de tige (S) comprend 35 à 65 % de la longueur (1) libre.

**3.** Soie selon la revendication 1 ou 2, **caractérisée en ce que** le profilage (101 ; 105 ; 108 ; 115 ; 118) est réalisé dans la zone supérieure de la partie flexible et active (d) et/ou dans la partie de pointe (t).

**4.** Soie selon l'une quelconque des revendications 1 à 3, **caractérisée en ce que** seule la partie de pointe (t) est pourvue d'un profilage (101 ; 115).

**5.** Soie selon l'une quelconque des revendications 1 à 4, **caractérisée en ce que** la section transversale de la soie dans la partie de base de tige (b) et/ou la partie de tige (c) et/ou la partie flexible et active (c) est réalisée de manière circulaire, ovale ou polygonale avec des coins arrondis.

**6.** Soie selon l'une quelconque des revendications 1 à 5, **caractérisée en ce que** la surface d'enveloppe de la soie est formée sur sa longueur (1) libre au moins par endroits par la surface périphérique d'un cylindre droit.

**7.** Soie selon l'une quelconque des revendications 1 à 6, **caractérisée en ce que** la surface d'enveloppe de la soie est formée sur sa longueur (1) libre au moins par endroits par la surface périphérique d'un cône ou d'un cône tronqué.

**8.** Soie selon la revendication 7, **caractérisée en ce que** la conicité est inférieure à 50 et en particulier à 10.

**9.** Soie selon l'une quelconque des revendications 1 à 8, **caractérisée en ce que** la forme de section transversale géométrique de la soie se modifie dans la zone de pointe (t).

**10.** Soie selon l'une quelconque des revendications 1 à 9, **caractérisée en ce que** les transitions entre les profilages et/ou entre le profilage et la surface périphérique sans cavité s'étendent en continu.

**11.** Soie selon l'une quelconque des revendications 1 à 10, **caractérisée en ce qu'**une partie (104) dotée de la surface périphérique sans cavité est disposée entre deux profilages (101 ; 101, 105 ; 101, 108) axialement espacés.

12. Soie selon l'une quelconque des revendications 1 à 11, **caractérisée en ce que** plusieurs rainures (109) sont disposées les unes au-dessus des autres.

13. Soie selon l'une quelconque des revendications 1 à 12, **caractérisée en ce que** le profilage (105) comprend plusieurs rainures longitudinales (106) se trouvant les unes à côté des autres dans le sens périphérique de la soie.

14. Soie selon l'une quelconque des revendications 1 à 13, **caractérisée en ce qu'**une arête pointue (107 ; 110) est formée entre des rainures (106 ; 109) contiguës.

15. Soie selon l'une quelconque des revendications 1 à 14, **caractérisée en ce que** la soie dans la zone du profilage possède une section transversale en forme de croix ou d'étoile avec plusieurs nervures (103) s'étendant dans le sens longitudinal de la soie, qui sont disposées réparties sur la périphérie de la soie.

16. Soie selon l'une quelconque des revendications 1 à 15, **caractérisée en ce que** la soie dans la zone du profilage possède une section transversale polygonale, en particulier triangulaire ou carrée.

17. Soie selon l'une quelconque des revendications 1 à 16, **caractérisée en ce que** deux profilages différents sont superposés par endroits.

18. Soie selon l'une quelconque des revendications 1 à 17, **caractérisée en ce que** la partie de pointe (t) est formée par des doigts (114 ; 120) s'étendant axialement.

19. Soie selon l'une quelconque des revendications 1 à 9, **caractérisée en ce que** la soie se compose de tronçons consécutifs axialement (100a, 100b, 100c) en différents matériaux.

20. Soie selon la revendication 19, **caractérisée en ce qu'**au moins l'un des tronçons (100a, 100b, 100c) est coloré.

21. Soie selon la revendication 19 ou 20, **caractérisée en ce qu'**au moins l'un des tronçons (100a, 100b, 100c) est configuré comme un indicateur de consommation.

22. Soie selon l'une quelconque des revendications 1 à 21, **caractérisée en ce que** la soie est pourvue au moins par endroits d'un revêtement (116).

23. Soie selon la revendication 22, **caractérisée en ce que** le profilage est pourvu au moins partiellement du revêtement (116).

24. Soie selon la revendication 22 ou 23, **caractérisée en ce que** le revêtement (116) est configuré comme un indicateur de consommation.

25. Soie selon l'une quelconque des revendications 1 à 24, **caractérisée en ce que** la soie possède en partant de la zone de racine un canal creux (117) axial intérieur.

26. Soie selon la revendication 25, **caractérisée en ce que** le canal creux (117) s'étend au travers de la soie entière jusque juste au-dessous de l'extrémité libre.

27. Soie selon la revendication 25, **caractérisée en ce que** le canal creux (117) s'étend au travers de la soie entière et débouche dans la partie de pointe (t).

28. Soie selon l'une quelconque des revendications 1 à 27, **caractérisée en ce que** le profilage comprend au moins un élément profilé (118) axial qui forme la partie de pointe (t).

29. Soie selon l'une quelconque des revendications 1 à 28, **caractérisée en ce que** la transition entre le profilage et la surface périphérique non profilée est effectuée dans un plan (E) qui s'étend essentiellement perpendiculairement à l'axe longitudinal de la soie.

30. Soie selon l'une quelconque des revendications 1 à 28, **caractérisée en ce que** la transition entre le profilage et la surface périphérique non profilée est effectuée dans un plan (E) qui s'étend essentiellement en biais par rapport à l'axe longitudinal de la soie.

31. Soie selon l'une quelconque des revendications 1 à 30, **caractérisée en ce que** la zone de racine (a) et la partie de base de tige (b) sont pourvues d'une enveloppe (119).

32. Soie selon l'une quelconque des revendications 1 à 31, **caractérisée en ce que** la soie entière est pourvue d'une enveloppe.

33. Soie selon la revendication 31 ou 32, **caractérisée en ce que** l'enveloppe fait partie du porte-soie.

34. Soie selon l'une quelconque des revendications 1 à 33, **caractérisée en ce que** la partie de base de tige (b) possède une longueur axiale ≤ 10 mm et en particulier ≤ 1 mm.

35. Soie selon l'une quelconque des revendications 1 à 34, **caractérisée en ce qu'**elle est fabriquée dans un procédé de moulage ou dans un procédé de moulage par injection.

36. Produit de brossage, en particulier brosse de nettoyage, brosse à dent ou brosse d'application, avec des soies selon l'une quelconque des revendications 1 à 35.

Fig. 1

Fig.2A

Fig.2B

IIIB    *103*    IIIB

*101*

*104*

IIIC    IIIC

*103*

*101*

*102*

*Fig.3A*

*103*

*103*

*Fig.3B*

*103*

*103*

*Fig.3C*

IVB        101        IVB

100

104

IVC        IVC

105

102

Fig.4A

Fig.4B

107

106

Fig.4C

Fig.5A

Fig.5B

Fig.5C

Fig.6A

Fig.6B

Fig.7A

Fig.7B

EP 1 484 997 B1

Fig.8A

Fig.8B

Fig.8C

35

Fig.9

*Fig.10*

Fig. 11

115a

115a                115

F

S

t

d

c

b

a

Fig.12

*101*

*103*

*103*

*100b*

*100*

*100a*

*Fig. 13*

*Fig. 14*

41

*Fig. 15A*

*Fig. 15B*

Fig.16A

Fig.16B

*101*

*103*

*100*

*117*

*Fig. 17A*

*103*

*Fig. 17B*

Fig. 19A

Fig. 18A

Fig. 19B

Fig. 18B

114

100

Fig.20A

114

Fig.20B

100

118

*Fig.21A*

118

118

*Fig.21B*    *Fig.21C*    *Fig.21D*    *Fig.21E*    *Fig.21F*

*Fig.21G*

*Fig.21H*    *Fig.21i*    *Fig.21J*    *Fig.21K*    *Fig.21L*

*Fig.21M*

Fig.22A

Fig.22B

*Fig.23A*

*Fig.23B*

Fig.24A

Fig.24B

101

103

100

119

Fig.25A

119

103

Fig.25B

120

100

119

Fig.26

ø0,2

ø0,49

60

30

0,27

ø0,77

Fig.27A

ø0,25

ø0,3

10,5

5,25

0,27

ø0,35

Fig.27B

1000mm/s

300mm/s

ø0.3

ø0.9

*i*

*i₁*

*e*

*e₁*

Fig.28

Fig.29

Fig.30

Fig.31

Fig.32

Fig.33

Fig.34

Fig.35

Fig.36

Fig.37

Fig.38

Fig.39

Fig.40

Fig.41

Fig.42

Fig.43

Fig.44

Fig.45

Fig.46

Fig.47

Fig.48

Fig.49

Fig.50

Fig.51

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10017167, Noppen
- US 1773969 A, Rippen
- US 3256545 A
- US 4167794 A
- WO 0203831 A1
- DE 19942147 A1
- WO 0203831 A